# EUROPÄISCHE PATENTSCHRIFT

(11) **EP 4 326 519 B1**
(45) Veröffentlichungstag und Bekanntmachung des Hinweises auf die Patenterteilung: **28.05.2025**
(21) Anmeldenummer: 22720323.9
(22) Anmeldetag: 31.03.2022
(51) Int. Cl.: B29C 44/44, B29C 44/34, B29C 44/54, B29C 44/58

(54) **VERFAHREN UND VORRICHTUNG ZUR VERARBEITUNG VON PARTIKELSCHAUMMATERIAL ZUR HERSTELLUNG EINES PARTIKELSCHAUMFORMTEILS**
METHOD AND DEVICE FOR PROCESSING PARTICLE FOAM MATERIAL TO PRODUCE A MOLDED PARTICLE FOAM PART
MÉTHODE ET DISPOSITIF POUR TRAITER UN MATÉRIAU DE MOUSSE PARTICULAIRE POUR PRODUIRE UNE PIÈCE MOULÉE EN MOUSSE PARTICULAIRE

(30) Priorität: 22.04.2021 DE 102021110353
(43) Veröffentlichungstag der Anmeldung: 28.02.2024
(73) Patentinhaber: Siegfried Hofmann GmbH, 96215 Lichtenfels (DE)
(72) Erfinder: SCHÜTZ, Johannes, 96215 Lichtenfels (DE); FISCHER, Patrick, 96215 Lichtenfels (DE); KLUGE, Thomas, 96215 Lichtenfels (DE)
(74) Vertreter: Hafner & Kohl PartmbB
(86) Internationale Anmeldenummer: PCT/EP2022/058544
(87) Internationale Veröffentlichungsnummer: WO 2022/223256

(56) Entgegenhaltungen:
- EP-A2- 0 259 597
- DE-A1- 102015 013 131
- DE-A1- 2 928 119
- DE-A1- 3 151 775
- JP-A- S56 159 130
- JP-A- S57 185 123

## Beschreibung

Die Erfindung betrifft ein Verfahren und eine Vorrichtung zur Verarbeitung von Partikelschaummaterial zur Herstellung eines Partikelschaumformteils.

Verfahren und Vorrichtungen zur Herstellung von Partikelschaumformteilen durch Verarbeitung expandierbarer oder expandierter Partikelschaummaterialien sind aus dem Stand der Technik in einer Vielzahl an unterschiedlichen Ausführungsformen dem Grunde nach bekannt.

Im Rahmen entsprechender Verfahren respektive des Betriebs entsprechender Vorrichtungen ist es dabei bekannt, eine eine durch mehrere Werkzeugelemente definierte Formwerkzeugkavität durchströmende Prozessfluidströmung zu erzeugen, welche über wenigstens eine düsenartige bzw. -förmige Öffnung eines ersten Werkzeugelements in die Formwerkzeugkavität einströmt und über wenigstens eine düsenartige bzw. -förmige Öffnung eines zweiten Werkzeugelements aus der Formwerkzeugkavität ausströmt.

Dieses auch als Querbedampfen bezeichnete Prinzip ermöglicht ein Durchströmen der mit zu einem Partikelschaumformteil zu verarbeitendem Partikelschaummaterial gefüllten Formwerkzeugkavität mit einem Prozessfluid, wie z. B. Heißdampf. Das vor dem Durchströmen der Formwerkzeugkavität mit dem Prozessfluid typischerweise partikulär vorliegende Partikelschaummaterial wird dabei durch den durch die Prozessfluidströmung bedingten Energieeintrag unter Ausbildung eines Partikelschaumformteils miteinander verbunden.

Wenngleich das Prinzip im Hinblick auf die damit herstellbaren Partikelschaumformteile grundsätzlich zu zufriedenstellenden Ergebnissen führt, besteht ein Bedarf nach einer Weiterentwicklung bzw. Verbesserung des Prinzips, etwa im Hinblick auf Aspekte wie die Effizienz des Energieeintrags respektive der Energieeinbringung im Rahmen des Verbindungsvorgangs jeweiliger Partikelschaummaterialien zu Partikelschaumformteilen und damit verbunden die Reduzierung von Zykluszeiten, etc.

DE 31 51 775 A1 offenbart ein Verfahren nach dem Oberbegriff des Anspruchs 1 und eine Vorrichtung zur Verarbeitung von Partikelschaummaterial.

Der Erfindung liegt die Aufgabe zugrunde, ein verbessertes Verfahren zur Verarbeitung von Partikelschaummaterial zur Herstellung eines Partikelschaumformteils anzugeben. In analoger Weise soll eine entsprechend verbesserte Vorrichtung zur Verarbeitung von Partikelschaummaterial zur Herstellung eines Partikelschaumformteils angegeben werden.

Die Aufgabe wird durch die Gegenstände der unabhängigen Ansprüche gelöst. Die hierzu abhängigen Ansprüche betreffen mögliche Ausführungsformen der Gegenstände der unabhängigen Ansprüche.

Ein erster Aspekt der Erfindung betrifft ein Verfahren zur Verarbeitung von Partikelschaummaterial zur Herstellung wenigstens eines Partikelschaumformteils. Das Verfahren richtet sich demnach auf die Verarbeitung von Partikelschaummaterialien, d. h. expandierbarer oder expandierter Kunststoffpartikel ("Kunststoffpartikel") aus wenigstens einem expandierbaren oder expandierten Kunststoffpartikelmaterial ("Kunststoffpartikelmaterial") zur Herstellung eines oder mehrerer Partikelschaumformteile. Verfahrensgemäß können z. B. expandierbare oder expandierte Kunststoffpartikel z. B. auf Basis von Polypropylen (PP bzw. EPP), expandiertem und/oder expandierbarem Polyamid (PA bzw. EPA), expandiertem und/oder expandierbarem Polystyrol (PS bzw. EPS) und expandiertem und/oder expandierbarem thermoplastischen Elastomer (TPE), insbesondere expandiertem und/oder expandierbarem thermoplastischen Polyurethan (TPU), zur Herstellung eines Partikelschaumformteils verarbeitet werden. Gleichermaßen können verfahrensgemäß Partikelschaummaterialien auf Basis so genannter Bio-Materialien, mithin expandierbaren bzw. expandierte Kunststoffpartikel auf pflanzlicher Basis, wie z. B. auf Polysaccharidbasis, d. h. z. B. Stärke- oder Zuckerbasis, zur Herstellung eines Partikelschaumformteils verarbeitet werden.

Das Verfahren beinhaltet sonach im Allgemeinen die Durchführung einer oder mehrerer Arbeitsprozesse zur Verarbeitung von Partikelschaummaterial zur Herstellung eines Partikelschaumformteils. Der Begriff "Arbeitsprozess" beinhaltet grundsätzlich jedweden im Rahmen des Verfahrens durchführbaren bzw. durchgeführten Prozess, welcher direkt oder indirekt mit der Verarbeitung von Partikelschaummaterial zur Herstellung eines Partikelschaumformteils in einem Zusammenhang steht.

Mithin sind verfahrensgemäß durchführbare bzw. durchgeführte Arbeitsprozesse insbesondere Verarbeitungsprozesse, in welchen eine (eigentliche) Verarbeitung in eine Formwerkzeugkavität eingefülltem Partikelschaummaterial, d. h. insbesondere ein Verbinden von Kunststoffpartikeln unter Ausbildung eines herzustellenden Partikelschaumformteils, erfolgt. Im Rahmen eines Verarbeitungsprozesses wird typischerweise wenigstens eine die mit zu einem Partikelschaumformteil zu verarbeitendem Partikelschaummaterial gefüllte Formwerkzeugkavität durchströmende Arbeits- bzw. Prozessfluidströmung eingesetzt bzw. verwendet. Bei einem eine jeweilige Arbeits- bzw. Prozessfluidströmung bildenden Arbeits- bzw. -Prozessfluid kann es sich um ein, insbesondere flüssiges, dampfförmiges oder gasförmiges, Energieträgerfluid, d. h. z. B. um eine Flüssigkeit, wie z. B. Wasser, um einen Dampf, wie z. B. Heißdampf, oder um ein Gas, wie z. B. Luft, welche(s) im Rahmen des Verarbeitungsprozesses Energie, d. h. insbesondere thermische Energie, auf das Partikelschaummaterial überträgt, handeln. Wie sich im Weiteren ergibt, betrifft das Verfahren insbesondere eine besondere Prozessführung im Rahmen entsprechender Verarbeitungsprozesse.

Der Vollständigkeit halber sei angemerkt, dass verfahrensgemäß durchführbare bzw. durchgeführte Arbeitsprozesse gleichermaßen Bereitstellungsprozesse, in welchen eine Menge an zu verarbeitendem Partikelschaummaterial, insbesondere eine in einem Verarbeitungsprozess zu verarbeitende Menge an Partikelschaummaterial, bereitgestellt wird, Förderprozesse, in welchen eine Menge an Partikelschaummaterial, insbesondere eine in einem Verarbeitungsprozess zu verarbeitende Menge an Partikelschaummaterial, entlang einer Förderstrecke in Richtung einer Formwerkzeugkavität befördert wird, oder Füllprozesse, in welchen eine Menge an Partikelschaummaterial, insbesondere eine in einem Verarbeitungsprozess zu verarbeitende Menge an Partikelschaummaterial, in eine Formwerkzeugkavität eingefüllt wird, sein können.

Zur Durchführung jeweiliger Arbeitsprozesse umfasst eine zur Durchführung des Verfahrens verwendete Vorrichtung eine oder mehrere Funktionseinheiten. Beispiele für entsprechende Funktionseinheiten werden weiter unten im Zusammenhang mit einer Vorrichtung gemäß dem zweiten Aspekt der Erfindung genannt.

Die wesentlichen Schritte des Verfahrens werden nachfolgend näher erläutert:
Das Verfahren beinhaltet einen ersten Schritt des Erzeugens einer eine durch zwei Werkzeugelemente eines Formwerkzeugs definierte Formwerkzeugkavität durchströmenden ersten Prozessfluidströmung, d. h. z. B. einer Dampf- bzw. Heißdampfströmung. Die erste Prozessfluidströmung strömt über wenigstens eine Öffnung eines ersten Werkzeugelements des Formwerkzeugs - wie sich im Weiteren ergibt, handelt es sich hierbei typischerweise um eine, insbesondere düsenartige bzw. -förmige, dritte Öffnung des ersten Werkzeugelements - in die Formwerkzeugkavität ein und über wenigstens eine Öffnung eines zweiten Werkzeugelements des Formwerkzeugs - wie sich im Weiteren ergibt, handelt es sich hierbei typischerweise um eine, insbesondere düsenartige bzw. -förmige, dritte Öffnung des zweiten Werkzeugelements - aus der Formwerkzeugkavität aus. In dem ersten Schritt des Verfahrens erfolgt sonach typischerweise ein so genanntes Querbedampfen der (hierbei typischerweise nahezu oder vollständig geschlossenen) Formwerkzeugkavität, d. h. die erste Prozessfluidströmung strömt in das erste Werkzeugelement über jeweilige erste Öffnungen des ersten Werkzeugelements ein, strömt über jeweilige dritte Öffnungen des ersten Werkzeugelements aus dem ersten Werkzeugelement in die Formwerkzeugkavität aus, durchströmt die Formwerkzeugkavität in Richtung des zweiten Werkzeugelements, wobei ein Verbinden des in der Formwerkzeugkavität befindlichen Partikelschaummaterials unter Ausbildung des herzustellenden Partikelschaumformteils erfolgt, strömt über jeweilige dritte Öffnungen des zweiten Werkzeugelements in das zweite Werkzeugelement ein und strömt aus dem zweiten Werkzeugelement über jeweilige zweite Öffnungen des zweiten Werkzeugelements aus.

Gleichermaßen beinhaltet das Verfahren einen zweiten Schritt des Erzeugens einer zweiten Prozessfluidströmung, d. h. z. B. einer Dampf- bzw. Heißdampfströmung. Die zweite Prozessfluidströmung strömt über wenigstens eine erste Öffnung des zweiten Werkzeugelements in das zweite Werkzeugelement ein und strömt über wenigstens eine zweite Öffnung des zweiten Werkzeugelements aus dem zweiten Werkzeugelement aus. Mithin wird in dem zweiten Schritt des Verfahrens parallel zu dem in dem ersten Schritt des Verfahrens erfolgenden Querbedampfen eine das zweite Werkzeugelement zwischen einer jeweiligen ersten und zweiten Öffnung durchströmende zweite Prozessfluidströmung erzeugt, sodass über die zweite Prozessfluidströmung während des Querbedampfens gezielt zusätzliche Energie in das zweite Werkzeugelement eingebracht wird. Bei dem zweiten Schritt des Verfahrens handelt es sich typischerweise nicht um ein zweites Querbedampfen der Formwerkzeugkavität ausgehend von dem zweiten Werkzeugelement, als die zweite Prozessfluidströmung das zweite Werkzeugelement typischerweise nur zwischen jeweiligen ersten und zweiten Öffnungen des zweiten Werkzeugelements durchströmt, nicht jedoch über entsprechende, insbesondere düsenartige bzw. -förmige, dritte Öffnungen des zweiten Werkzeugelements in die Formwerkzeugkavität ausströmt.

Wie sich im Weiteren ergibt, werden der erste und der zweite Schritt verfahrensgemäß typischerweise gleichzeitig durchgeführt. Die Bezeichnung "erster Schritt" und "zweiter Schritt" deuten sonach nicht an, dass die Schritte zeitlich aufeinander folgend durchgeführt werden, sondern dass es sich hier um jeweilige Schritte der Erzeugung entsprechender erster und zweite Prozessfluidströmungen handelt.

Verfahrensgemäß unterscheiden sich die erste und die zweite Prozessfluidströmung in wenigstens einem die Strömungseigenschaften beeinflussenden Strömungsparameter. Die verfahrensgemäß über eine entsprechende Steuerungs- und/oder Regelungseinrichtung gezielt mögliche Einstellung, d. h. insbesondere Steuerung bzw. Regelung, jeweiliger die Strömungseigenschaften der ersten und zweiten Prozessfluidströmung beeinflussender Strömungsparameter erfolgt sonach mit der Maßgabe, dass sich die erste und die zweite Prozessfluidströmung in wenigstens einem die Strömungseigenschaften beeinflussenden Strömungsparameter unterscheiden. Durch diese gezielte Abstimmung der Strömungsparameter bzw. -eigenschaften der Prozessfluidströmungen aufeinander, kann sichergestellt werden, dass sich die erste und zweite Prozessfluidströmung nicht gegenseitig beeinträchtigen. Insbesondere kann durch diese gezielte Abstimmung der Strömungsparameter bzw. -eigenschaften der Prozessfluidströmungen aufeinander sichergestellt werden, dass die zweite Prozessfluidströmung die die Formwerkzeugkavität durchströmende erste Prozessfluidströmung und somit das durch die erste Prozessfluidströmung erfolgende bzw. herbeigeführte Verbinden des Partikelschaummaterials zur Herstellung eines jeweiligen Partikelschaumformteils nicht negativ beeinflusst.

Das Verfahren beruht sonach auf dem Prinzip des zu dem Erzeugen einer entsprechenden ersten Prozessfluidströmung zusätzlich erfolgenden Erzeugens einer entsprechenden zweiten Prozessfluidströmung, was sich überraschenderweise deutlich positiv auf die Effizienz des Verarbeitungsprozesses und somit auf die Effizienz des gesamten Verfahrens auswirkt, als die dem zweiten Werkzeugelement durch die zweite Prozessfluidströmung zusätzlich zugeführte Energie die Effizienz des Energieeintrags respektive der Energieeinbringung im Rahmen des Verbindungsvorgangs jeweiliger Partikelschaummaterialien zu Partikelschaumformteilen erhöht und damit verbunden die Reduzierung von Zykluszeiten ermöglicht.

Insgesamt liegt damit ein verbessertes Verfahren zur Verarbeitung von Partikelschaummaterial zur Herstellung eines Partikelschaumformteils vor.

Der wenigstens eine die Strömungseigenschaften beeinflussende Strömungsparameter kann insbesondere der Druck bzw. das Druckniveau der ersten und zweiten Prozessfluidströmungen sein. Mithin kann die verfahrensgemäß über eine entsprechende Steuerungs- und/oder Regelungseinrichtung gezielt mögliche Steuerung bzw. Regelung jeweiliger die Strömungseigenschaften der ersten und zweiten Prozessfluidströmung beeinflussender Strömungsparameter sonach mit der Maßgabe erfolgen, dass sich die erste und die zweite Prozessfluidströmung in ihrem Druck bzw. Druckniveau unterscheiden. Die Erfassung des Drucks bzw. Druckniveaus der jeweiligen Prozessfluidströmungen kann über Druckerfassungseinrichtungen, wie z. B. Drucksensoren, erfolgen. Entsprechende Druckerfassungseinrichtungen können z. B. an oder in jeweiligen Werkzeugelementen angeordnet oder ausgebildet sein. Insbesondere können entsprechende Druckerfassungseinrichtungen an oder im Bereich jeweiliger erster und/oder zweiter und/oder dritter Öffnungen der jeweiligen Werkzeugelemente angeordnet oder ausgebildet sein. Der Druck bzw. Druckniveau jeweiliger Prozessfluidströmungen kann sich sonach beispielsweise auf den Druck bzw. das Druckniveau bei Einströmen und/oder Ausströmen der jeweiligen Prozessfluidströmungen in die bzw. aus den jeweiligen Werkzeugelementen beziehen.

Verfahrensgemäß weist die zweite Prozessfluidströmung typischerweise einen geringeren Druck als die erste Prozessfluidströmung auf. Derart kann sichergestellt werden, dass die zweite Prozessfluidströmung die erste Prozessfluidströmung nicht beeinträchtigt, etwa indem die zweite Prozessfluidströmung aufgrund eines zu hohen Drucks ein Ausströmen der ersten Prozessfluidströmung aus der Formwerkzeugkavität über entsprechende dritte Öffnungen des zweiten Werkzeugelements bzw. ein Einströmen der ersten Prozessfluidströmung in das zweite Werkzeugelement über jeweilige dritte Öffnungen des zweiten Werkzeugelements behindert. Der Druck bzw. das Druckniveau der zweiten Prozessfluidströmung kann, insbesondere so relativ zu dem Druck bzw. Druckniveau der ersten Prozessfluidströmung, insbesondere nach Durchströmen der Formwerkzeugkavität, gewählt sein, dass durch die zweite Prozessfluidströmung eine gewisse Sogwirkung erzeugt wird, welche das Durchströmen der Formwerkzeugkavität mit der ersten Prozessfluidströmung begünstigt.

Anhand von Untersuchungen konnte gezeigt werden, dass die zweite Prozessfluidströmung zweckmäßig einen um Faktor 2 geringeren Druck als die erste Prozessfluidströmung aufweist. Dies ist jedoch beispielhaft zu verstehen. Der Druck bzw. das Druckniveau der zweiten Prozessfluidströmung kann z. B. das 0,95-fache, das 0,9-fache, das 0,85-fache, das 0,8-fache, das 0,75-fache, das 0,7-fache, das 0,65-fache, das 0,6-fache das 0,55-fache, das 0,5-fache das 0,45-fache, das 0,4-fache, das 0,35-fache, das 0,3-fache das 0,25-fache, das 0,2-fache das 0,15-fache, das 0,1-fache oder das 0,05-fache des Drucks bzw. Druckniveaus der ersten Prozessfluidströmung betragen.

An dieser Stelle ist allgemein anzumerken, dass die entsprechenden Druckunterschiede zwischen der ersten und der zweiten Prozessfluidströmung verfahrensgemäß gegebenenfalls dynamisch positiv oder negativ, mithin nach oben und/oder unten, angepasst bzw. eingestellt, d. h. insbesondere gesteuert bzw. geregelt, werden können. Beispielsweise kann der Druck bzw. das Druckniveau der zweiten Prozessfluidströmung zu einem ersten Zeitpunkt z. B. das 0,75-fache und zu einem weiteren Zeitpunkt das 0,9-fache oder das 0,4-fache des Drucks bzw. Druckniveaus der ersten Prozessfluidströmung betragen. Grundsätzlich ist somit die Realisierung verschiedener, gegebenenfalls variabler, Druckunterschiedsprofile denkbar, welche typischerweise in Abhängigkeit von Eigenschaften des zu verarbeitenden Partikelschaummaterials, wie z. B. der chemischen und/oder physikalischen Zusammensetzung des Partikelschaummaterials, und/oder von Eigenschaften der Konfiguration des Formwerkzeugs, wie z. B. der Größe der Formwerkzeugkavität, etc. ausgewählt sind.

Aus vorstehenden Erläuterungen zu der Erzeugung entsprechender erster und zweiter Prozessfluidströmungen ergibt sich, dass die bzw. eine zur Durchführung des Verfahrens verwendete Vorrichtung sonach ein Formwerkzeug mit wenigstens zwei, gegebenenfalls auch als Werkzeughälften bezeichenbaren, Werkzeugelementen umfasst, welche eingerichtet sind, eine, gegebenenfalls auch als Prozessraum bezeichenbare, Formwerkzeugkavität zu definieren. Die jeweiligen Werkzeugelemente umfassen jeweils wenigstens eine, gegebenenfalls auch als Einströmöffnung bezeichenbare, erste Öffnung, über welche ein Prozessfluid bzw. eine Prozessfluidströmung in das jeweilige Werkzeugelement einströmen kann, und wenigstens eine, gegebenenfalls auch als Ausströmöffnung bezeichenbare, zweite Öffnung, über welche ein Prozessfluid bzw. eine Prozessfluidströmung aus dem jeweiligen Werkzeugelement ausströmen kann. Die jeweiligen Werkzeugelemente umfassen darüber hinaus wenigstens eine, insbesondere düsenartige bzw. -förmig ausgeführte, dritte Öffnung, über welche eine über wenigstens eine erste Öffnung in das jeweilige Werkzeugelement eingeströmte Prozessfluidströmung aus dem jeweiligen Werkzeugelement in die bzw. eine Formwerkzeugkavität ausströmen kann.

Die jeweiligen ersten, zweiten und dritten Öffnungen eines jeweiligen Werkzeugelements sind typischerweise über eine wenigstens einen das jeweilige Werkzeugelement zumindest abschnittsweise durchsetzenden Strömungskanal umfassende Strömungskanalstruktur strömungstechnisch miteinander verbunden, sodass ein über eine jeweilige erste Öffnung in ein jeweiliges Werkzeugelement eingeströmte Prozessfluidströmung über eine jeweilige zweite Öffnung und/oder über eine jeweilige dritte Öffnung aus dem jeweiligen Werkzeugelement ausströmen kann. Eine entsprechende Strömungskanalstruktur kann sich jeweils zumindest abschnittsweise konturnah, d. h. nahe unterhalb jeweiliger formgebender Werkzeugelementabschnitte jeweiliger Werkzeugelemente, erstrecken, etwa um, wenn von einer Prozessfluidströmung durchströmt, einen Energieübertrag von dem jeweiligen Werkzeugelementabschnitt auf das bzw. ein in die Formwerkzeugkavität eingefüllte(s) Partikelschaummaterial zu ermöglichen.

Insbesondere jeweiligen werkzeugelementseitigen ersten und zweiten Öffnungen kann jeweils wenigstens eine Verschlusseinrichtung zugeordnet sein, welche wenigstens ein zwischen einer auch als Offenstellung bezeichenbaren ersten Stellung, in welcher ein Durchströmen der jeweiligen Verschlusseinrichtung mit einer Prozessfluidströmung möglich ist, und einer auch als Schließstellung bezeichenbaren zweiten Stellung, in welcher ein Durchströmen der jeweiligen Verschlusseinrichtung mit einer Prozessfluidströmung nicht möglich ist, bewegbares Verschlusselement umfasst. Ein entsprechendes Verschlusselement kann typischerweise auch in wenigstens eine zwischen einer entsprechenden ersten und zweiten Stellung liegende Zwischenstellung bewegt werden. Entsprechende Verschlusseinrichtungen können insbesondere als aktive oder passive Strömungsbegrenzungseinrichtungen ausgebildet sein bzw. solche umfassen. Entsprechende aktive oder passive Strömungsbegrenzungseinrichtungen können z. B. als Ventileinrichtungen, insbesondere als steuer- bzw. regelbare Regelventileinrichtungen, ausgebildet sein. Zur Durchführung des Verfahrens kommen insbesondere steuer- bzw. regelbare Regelventileinrichtungen in Betracht bzw. in Verwendung.

Verfahrensgemäß kann zur Verarbeitung von Partikelschaummaterial zur Herstellung eines Partikelschaumformteils kann sonach ein erstes und ein zweites Werkzeugelement verwendet werden, welches jeweils eine sich zwischen wenigstens einer jeweiligen als Einströmöffnung bezeichenbaren ersten Öffnung und wenigstens einer jeweiligen als Ausströmöffnung bezeichenbaren zweiten Öffnung erstreckend angeordnete oder ausgebildete, von der ersten und/oder zweiten Prozessfluidströmung durchströmbare bzw. durchströmte Strömungskanalstruktur umfasst. Wie erwähnt, kann der oder den jeweiligen ersten Öffnung(en) wenigstens eine erste Ventil- bzw. Regelventileinrichtung, im Allgemeinen eine entsprechende Verschlusseinrichtung, und/oder der oder den jeweiligen zweiten Öffnung(en) wenigstens eine zweite Ventil- bzw. Regelventileinrichtung, im Allgemeinen eine entsprechende Verschlusseinrichtung, zugeordnet sein.

Das verfahrensgemäß erfolgende Erzeugen einer entsprechenden ersten Prozessfluidströmung, wobei die erste Prozessfluidströmung über wenigstens eine dritte Öffnung eines ersten Werkzeugelements in die Formwerkzeugkavität einströmt und nach Durchströmen der Formwerkzeugkavität über wenigstens eine dritte Öffnung eines zweiten Werkzeugelements aus der Formwerkzeugkavität ausströmt, beinhaltet für eine entsprechend konfigurierte Vorrichtung bezüglich des jeweiligen ersten Werkzeugelements sonach typischerweise, dass die wenigstens eine erste Öffnung des ersten Werkzeugelements zum Einströmen der ersten Prozessfluidströmung über die wenigstens eine erste Öffnung in das erste Werkzeugelement freigegeben ist bzw. wird; mithin ist bzw. wird das Verschlusselement einer der wenigstens einen ersten Öffnung des ersten Werkzeugelements zugeordneten Verschlusseinrichtung in die Offenstellung bewegt. Gleichermaßen ist bzw. wird die wenigstens eine zweite Öffnung des ersten Werkzeugelements zum Ausströmen der ersten Prozessfluidströmung aus dem ersten Werkzeugelement über die wenigstens eine zweite Öffnung nicht freigegeben; mithin ist bzw. wird das Verschlusselement einer der wenigstens einen zweiten Öffnung des ersten Werkzeugelements zugeordneten Verschlusseinrichtung in die Schließstellung bewegt. Die über die wenigstens eine erste Öffnung in das erste Werkzeugelement eingeströmte erste Prozessfluidströmung strömt sonach über die wenigstens eine dritte Öffnung des ersten Werkzeugelements aus dem ersten Werkzeugelement in die typischerweise mit Partikelschaummaterial gefüllte Formwerkzeugkavität aus. Nachdem die erste Prozessfluidströmung die, wie erwähnt, typischerweise mit Partikelschaummaterial gefüllte Formwerkzeugkavität durchströmt hat, strömt die erste Prozessfluidströmung über wenigstens eine dritte Öffnung des zweiten Werkzeugelements in das zweite Werkzeugelement ein und über wenigstens eine zweite Öffnung des zweiten Werkzeugelements aus dem zweiten Werkzeugelement aus.

Das verfahrensgemäß erfolgende Erzeugen einer eine durch zwei Werkzeugelemente definierte Formwerkzeugkavität durchströmenden ersten Prozessfluidströmung, wobei die erste Prozessfluidströmung über wenigstens eine dritte Öffnung eines ersten Werkzeugelements in die Formwerkzeugkavität einströmt und über wenigstens eine zweite Öffnung eines zweiten Werkzeugelements aus der Formwerkzeugkavität ausströmt, beinhaltet für eine entsprechend konfigurierte Vorrichtung bezüglich des jeweiligen zweiten Werkzeugelements sonach typischerweise, dass die wenigstens eine zweite Öffnung des ersten Werkzeugelements zum Ausströmen der ersten Prozessfluidströmung über die wenigstens eine zweite Öffnung aus dem zweiten Werkzeugelement freigegeben ist bzw. wird; mithin ist bzw. wird das Verschlusselement einer der wenigstens einen zweiten Öffnung des zweiten Werkzeugelements zugeordneten Verschlusseinrichtung in die Offenstellung bewegt. Die über die wenigstens eine dritte Öffnung in das zweite Werkzeugelement eingeströmte erste Prozessfluidströmung strömt sonach über die wenigstens eine zweite Öffnung des zweiten Werkzeugelements aus dem zweiten Werkzeugelement aus.

Die erste und die zweite Prozessfluidströmung können in allen Ausführungsformen über wenigstens eine Prozessfluidbereitstellungseinrichtung bereitgestellt werden. Verfahrensgemäß kann dabei eine Prozessfluidbereitstellungseinrichtung verwendet werden, welche eingerichtet ist, wahlweise dem ersten Werkzeugelement ein Prozessfluid zur Ausbildung der ersten Prozessfluidströmung bereitzustellen und/oder dem zweiten Werkzeugelement ein Prozessfluid zur Ausbildung der zweiten Prozessfluidströmung bereitzustellen. Dem ersten Werkzeugelement und dem zweiten Werkzeugelement kann sonach eine gemeinsame Prozessfluidbereitstellungseinrichtung zugeordnet werden, über welche sich ein Prozessfluid wahlweise zur Erzeugung einer ersten und/oder zweiten Prozessfluidströmung bereitstellen lässt. Prinzipiell denkbar ist es jedoch auch, dass eine dem bzw. einem ersten Werkzeugelement zugeordnete erste Prozessfluidbereitstellungseinrichtung, über welche sich ein Prozessfluid zur Erzeugung einer ersten Prozessfluidströmung bereitstellen lässt, und eine dem bzw. einem zweiten Werkzeugelement zugeordnete zweite Prozessfluidbereitstellungseinrichtung verwendet wird, über welche sich ein Prozessfluid zur Erzeugung einer zweiten Prozessfluidströmung bereitstellen lässt. Eine entsprechende Prozessfluidbereitstellungseinrichtung kann in allen Ausführungsformen z. B. eine Behältereinrichtung umfassen, welche mit, gegebenenfalls auf eine bestimmte Temperatur und/oder einen bestmimten Druck konditioniertem, Prozessfluid zur Bereitstellung an das erste und/oder zweite Werkzeugelement gefüllt ist.

Wie erwähnt, können verfahrensgemäß Werkzeugelemente verwendet werden, welche jeweils eine wenigstens einen Strömungskanal aufweisende Strömungskanalstruktur umfassen. Insbesondere kann ein erstes und ein zweites Werkzeugelement verwendet werden, welche jeweils eine sich zwischen wenigstens einer jeweiligen ersten Öffnung und wenigstens einer jeweiligen zweiten Öffnung erstreckend angeordnete oder ausgebildete, von der jeweiligen Prozessfluidströmung durchströmbare bzw. durchströmte Strömungskanalstruktur umfassen. Dabei kann der oder jeweiligen ersten Öffnungen, wie ebenso erwähnt, jeweils wenigstens eine erste Ventil- bzw. Regelventileinrichtung und/oder der oder den jeweiligen zweiten Öffnungen jeweils wenigstens eine zweite Ventil- bzw. Regelventileinrichtung zugeordnet sein. Jedes Werkzeugelement kann sonach wenigstens eine einer jeweiligen ersten und/oder zweiten Öffnung zugeordnete erste und/oder zweite Ventil- bzw. Regelventileinrichtung, d. h. im Allgemeinen wenigstens eine Verschlusseinrichtung, umfassen, über welche sich Strömungsparameter, d. h. insbesondere der Druck, der in das jeweilige Werkzeugelement einströmenden Prozessfluidströmung und/oder Strömungsparameter, d. h. insbesondere der Druck, der aus dem jeweiligen Werkzeugelement ausströmenden Prozessfluidströmung einstellen, d. h. steuern bzw. regeln, lassen.

Ausgehend von jeweils mit wenigstens einer zweiten Ventil- bzw. Regelventileinrichtung konfigurierten Werkzeugelementen, kann verfahrensgemäß wenigstens eine den jeweiligen werkzeugelementseitigen zweiten Verschluss- bzw. Regelventileinrichtungen nachgeschaltet angeordnete weitere regelbare Ventil- bzw. Regelventileinrichtung verwendet werden. Diese wenigstens eine, auch als "dritte Regelventileinrichtung" bezeichenbare weitere Ventil- bzw. Regelventileinrichtung ist den jeweiligen werkzeugelementseitigen zweiten Ventil- bzw. Regelventileinrichtungen typischerweise gemeinsam zugeordnet, sodass die jeweiligen werkzeugelementseitigen zweiten Ventil- bzw. Regelventileinrichtungen mit der wenigstens einen weiteren Ventil- bzw. Regelventileinrichtung über eine gemeinsame Leitungsverbindung strömungstechnisch verbindbar oder verbunden sind.

Denkbar ist es ferner, dass mehrere den jeweiligen werkzeugelementseitigen zweiten Ventil- bzw. Regelventileinrichtungen nachgeschaltet angeordnete weitere regelbare Ventil- bzw. Regelventileinrichtungen verwendet werden. Die die mehreren weiteren Ventil- bzw. Regelventileinrichtungen sind typischerweise parallel geschaltet angeordnet oder ausgebildet. Die mehreren, z. B. auch als "dritte Regelventileinrichtung" und "vierte Regelventileinrichtung" bezeichenbaren weiteren Ventil- bzw. Regelventileinrichtungen sind den jeweiligen zweiten Ventil- bzw. Regelventileinrichtungen typischerweise gemeinsam zugeordnet, sodass die jeweiligen zweiten Ventil- bzw. Regelventileinrichtungen mit den mehreren weiteren Ventil- bzw. Regelventileinrichtungen über eine gemeinsame Leitungsverbindung strömungstechnisch verbindbar oder verbunden sind.

Verfahrensgemäß kann der Betrieb der wenigstens einen weiteren regelbaren Ventil- bzw. Regelventileinrichtung geregelt werden, um den Druck bzw. das Druckniveau innerhalb des ersten und/oder zweiten Werkzeugelements und somit den Druck bzw. das Druckniveau einer das erste und/oder zweite Werkzeugelement durchströmenden Prozessfluidströmung einzustellen, d. h. insbesondere zu steuern bzw. regeln. Derart ist eine zusätzliche Möglichkeit der Einstellung des Drucks bzw. Druckniveaus einer das erste und/oder zweite Werkzeugelement durchströmenden Prozessfluidströmung gegeben. Eine entsprechende Regelung des Drucks bzw. Druckniveaus innerhalb des ersten und/oder zweiten Werkzeugelements bzw. einer das erste und/oder zweite Werkzeugelement durchströmenden Prozessfluidströmung ist insbesondere mit einer Konfiguration der verfahrensgemäß verwendeten Vorrichtung mit mehreren weiteren Ventil- bzw. Regelventileinrichtungen in paralleler Anordnung möglich, wobei eine z. B. als dritte Ventil- bzw. Regelventileinrichtung bezeichenbare weitere Ventil- bzw. Regelventileinrichtung als Hauptventil- bzw. Hauptregelventileinrichtung verwendet werden kann und eine parallel dazu angeordnete, z. B. als vierte Ventil- bzw. Regelventileinrichtung bezeichenbare weitere Ventil- bzw. Regelventileinrichtung als Steuer- oder Regelventileinrichtung für die Steuerung bzw. Regelung des Drucks bzw. Druckniveaus innerhalb des ersten und/oder zweiten Werkzeugelements verwendet werden kann.

Der Betrieb der wenigstens einen weiteren regelbaren Regelventileinrichtung kann ebenso eingestellt, d. h. insbesondere gesteuert oder geregelt, werden, um den Druck bzw. das Druckniveau innerhalb einer jeweiligen werkzeugelementseitigen zweiten Ventil- bzw. Regelventileinrichtung einzustellen. Insbesondere kann der Betrieb der wenigstens einen weiteren regelbaren Regelventileinrichtung eingestellt, d. h. insbesondere gesteuert oder geregelt, werden, um den Druck bzw. das Druckniveau zweiten Ventil- bzw. Regelventileinrichtung des zweiten Werkzeugelements einzustellen. Die Einstellung des Drucks bzw. -Druckniveaus innerhalb des zweiten Werkzeugelements kann insbesondere erfolgen, wenn die dem ersten Werkzeugelement zugeordnete zweite Verschluss- bzw. Regelventileinrichtung geschlossen ist. In analoger Weise kann die Einstellung des Drucks bzw. Druckniveaus innerhalb des ersten Werkzeugelements erfolgen, wenn die dem zweiten Werkzeugelement zugeordnete zweite Verschlusseinrichtung geschlossen ist.

Wie erwähnt, strömen die erste und die zweite Prozessfluidströmung, typischerweise gleichzeitig durch die jeweiligen Werkzeugelemente. Anfangs- und Endzeitpunkte der ersten und zweiten Prozessfluidströmung können dabei zusammenfallen. Mit anderen Worten wird die zweite Prozessfluidströmung verfahrensgemäß typischerweise erzeugt, wenn auch die erste Prozessfluidströmung erzeugt wird oder erzeugt wurde. Die beiden Prozessfluidströmungen können je nach Verarbeitungsprozess, d. h. insbesondere in Abhängigkeit von Parametern des zu verarbeitenden Partikelschaummaterials, wie z. B. dessen chemischer und/oder physikalischer Konfiguration, Menge, etc., und/oder in Abhängigkeit von Parametern des herzustellenden Partikelschaumformteils, wie z. B. dessen Geometrie, Volumen, etc., insbesondere für einen Zeitraum zwischen 0,2 s und 60 s, weiter insbesondere für einen Zeitraum zwischen 0,2 s und 45 s, weiter insbesondere einen Zeitraum zwischen 0,2 s und 30 s, weiter insbesondere für einen Zeitraum zwischen 0,2 s und 15 s, gleichzeitig bzw. parallel strömen. Die Dauer des gleichzeitigen bzw. parallelen Erzeugens bzw. Strömens der Prozessfluidströmungen bestimmt sich sonach typischerweise in Abhängigkeit entsprechender partikelschaummaterial- bzw. partikelschaumformteilspezifischer Parameter.

Verfahrensgemäß können die Werkzeugelemente, insbesondere für unterschiedliche Bedampfungsvorgänge, innerhalb welcher jeweils die erste und zweite Prozessfluidströmung erzeugt wird, abwechseln bzw. wechselweise als erstes Werkzeugelement und als zweites Werkzeugelement verwendet und demnach, z. B. zyklusabhängig bzw. -spezifisch, abwechselnd bzw. wechselweise von einer ersten und einer zweiten Prozessfluidströmung durchströmt werden. Derart lässt sich eine so genannte "Wechselbedampfung" realisieren, welche, über einen kompletten Verarbeitungsprozess zu Herstellung eines Partikelschaumformteils hinweg betrachtet, insgesamt ein weitgehend homogenes Durchströmen des innerhalb der Formwerkzeugkavität befindlichen und unter Ausbildung eines Partikelschaumformteils zu verarbeitenden Partikelschaummaterials ermöglicht, was sich typischerweise positiv auf die Eigenschaften des herzustellenden Partikelschaumformteils auswirkt.

Ein zweiter Aspekt der Erfindung betrifft eine Vorrichtung zur Verarbeitung von Partikelschaummaterial zur Herstellung eines Partikelschaumformteils. Die Vorrichtung kann auch als Formteilautomat bezeichenbar sein bzw. bezeichnet werden.

Die Vorrichtung umfasst als zentrale Funktionseinheit typischerweise ein Formwerkzeug mit einem ersten Werkzeugelement und einem zweiten Werkzeugelement, wobei das erste und das zweite Werkzeugelement, insbesondere durch wenigstens eine Bewegung relativ zueinander, eingerichtet sind, eine Formwerkzeugkavität zu definieren.

Das erste Werkzeugelement weist wenigstens eine entsprechende erste Öffnung auf, über welches eine Prozessfluidströmung über das erste Werkzeugelement in die Formwerkzeugkavität einströmbar ist, und wenigstens eine entsprechende, insbesondere düsenartige bzw. -förmige, dritte Öffnung, über welches eine Prozessfluidströmung über das erste Werkzeugelement in die Formwerkzeugkavität einströmbar respektive über welches eine Prozessfluidströmung aus der Formwerkzeugkavität in das erste Werkzeugelement einströmbar ist. Typischerweise weist das erste Werkzeugelement typischerweise auch wenigstens eine entsprechende zweite Öffnung auf, über welche ein Prozessfluid aus dem ersten Werkzeugelement ausströmbar ist, wobei es nicht in die Formwerkzeugkavität strömt.

Das zweite Werkzeugelement weist wenigstens eine entsprechende, insbesondere düsenartige bzw. -förmige, dritte Öffnung auf, über welches eine Prozessfluidströmung aus der Formwerkzeugkavität in das zweite Werkzeugelement einströmbar respektive über welches eine Prozessfluidströmung über das zweite Werkzeugelement in die Formwerkzeugkavität einströmbar ist, und wenigstens eine entsprechende zweite Öffnung auf, über welche eine Prozessfluidströmung aus dem zweiten Werkzeugelement ausströmbar ist, wobei es nicht in die Formwerkzeugkavität einströmt. Typischerweise weist das zweite Werkzeugelement typischerweise auch wenigstens eine entsprechende erste Öffnung auf, über welche ein Prozessfluid in das zweite Werkzeugelement einströmbar ist.

Die Vorrichtung umfasst als weitere Funktionseinheit weiterhin typischerweise eine Prozessfluidaktuatoreinrichtung. Die Prozessfluidaktuatoreinrichtung ist zur Steuerung bzw. Regelung des Betriebs einer oder mehrerer der den jeweiligen Werkzeugelementen zuordenbaren bzw. zugeordneten Verschlusseinrichtungen, insbesondere zur Erzeugung jeweiliger Prozessfluidströmungen, eingerichtet. Über eine entsprechende Steuerung bzw. Regelung des Betriebs jeweiliger den jeweiligen Werkzeugelementen zugeordneter Verschlusseinrichtungen lässt sich eine entsprechende die Formwerkzeugkavität durchströmende erste Prozessfluidströmung erzeugen, welche über wenigstens eine dritte Öffnung des ersten Werkzeugelements in die Formwerkzeugkavität einströmt und über wenigstens eine dritte Öffnung des zweiten Werkzeugelements aus der Formwerkzeugkavität ausströmt, und eine entsprechende das zweite Werkzeugelement durchströmende zweite Prozessfluidströmung erzeugen, welche über wenigstens eine erste Öffnung des zweiten Werkzeugelements in das zweite Werkzeugelement einströmt und über wenigstens eine zweite Öffnung des zweiten Werkzeugelements aus dem zweiten Werkzeugelement ausströmt, wobei es nicht in die Formwerkzeugkavität einströmt.

Die Prozessfluidaktuatoreinrichtung ist über eine entsprechende Steuerung bzw. Regelung des Betriebs einer oder mehrerer der den jeweiligen Werkzeugelementen zugeordneten Verschlusseinrichtungen ferner zum Einstellen wenigstens eines die Strömungseigenschaften wenigstens einer Prozessfluidströmung beeinflussenden Strömungsparameters, d. h. insbesondere des Drucks bzw. Druckniveaus, eingerichtet, insbesondere derart, dass sich die erste und die zweite Prozessfluidströmung in wenigstens einem die Strömungseigenschaften beeinflussenden Strömungsparameter unterscheiden.

Die Prozessfluidaktuatoreinrichtung kann sonach im Allgemeinen jedenfalls funktionell betrachtet diejenigen Funktionseinheiten der Vorrichtung umfassen, welche zum Einstellen wenigstens eines die Strömungseigenschaften wenigstens einer Prozessfluidströmung beeinflussenden Strömungsparameters, wie z. B. des Drucks bzw. Druckniveaus jeweiliger Prozessfluidströmungen, erforderlich sind. Hierzu zählen insbesondere entsprechende, jeweiligen Werkzeugelementen direkt oder indirekt zuordenbare oder zugeordnete Verschlusseinrichtungen, d. h. insbesondere Ventil- bzw. Regelventileinrichtungen.

Der Prozessfluidaktuatoreinrichtung ist als weitere Funktionseinheit der Vorrichtung typischerweise eine Computer-implementierte, d. h. insbesondere hardware- und/oder softwaremäßig implementierte, Steuer- und/oder Regeleinrichtung zugeordnet, welche insbesondere eingerichtet ist, Steuer- bzw. Regelinformationen zur Steuerung bzw. Regelung des Betriebs einer oder mehrerer der den jeweiligen Werkzeugelementen zugeordneten Verschlusseinrichtungen, z. B. zur Einstellung wenigstens eines die Strömungseigenschaften wenigstens einer Prozessfluidströmung beeinflussenden Strömungsparameters, zu erzeugen, insbesondere derart, dass sich die erste und die zweite Prozessfluidströmung in wenigstens einem die Strömungseigenschaften beeinflussenden Strömungsparameter, wie z. B. dem Druck bzw. Druckniveau, unterscheiden. Mithin kann die Steuer- und/oder Regeleinrichtung eingerichtet entsprechend sein, entsprechende Steuer- bzw. Regelinformationen zum Steuern bzw. Regeln des Betriebs jeweiliger Verschlusseinrichtungen, d. h. insbesondere jeweiliger Regelventileinrichtungen, insbesondere derart, dass sich die erste und die zweite Prozessfluidströmung in dem wenigstens einen die Strömungseigenschaften beeinflussenden Strömungsparameter unterscheiden, zu erzeugen.

Sämtliche Ausführungen im Zusammenhang mit dem Verfahren gemäß dem ersten Aspekt der Erfindung gelten analog für die Vorrichtung gemäß dem zweiten Aspekt der Erfindung und umgekehrt.

Die Erfindung ist anhand von Ausführungsbeispielen in den Zeichnungen näher erläutert. Dabei zeigt:
Fig. 1 eine Prinzipdarstellung einer Vorrichtung zur Verarbeitung von Partikelschaummaterial zur Herstellung eines Partikelschaumformteils gemäß einem Ausführungsbeispiel; und
Fig. 2 ein Diagramm zur Veranschaulichung eines Verfahrens zur Verarbeitung von Partikelschaummaterial zur Herstellung eines Partikelschaumformteils gemäß einem Ausführungsbeispiel.

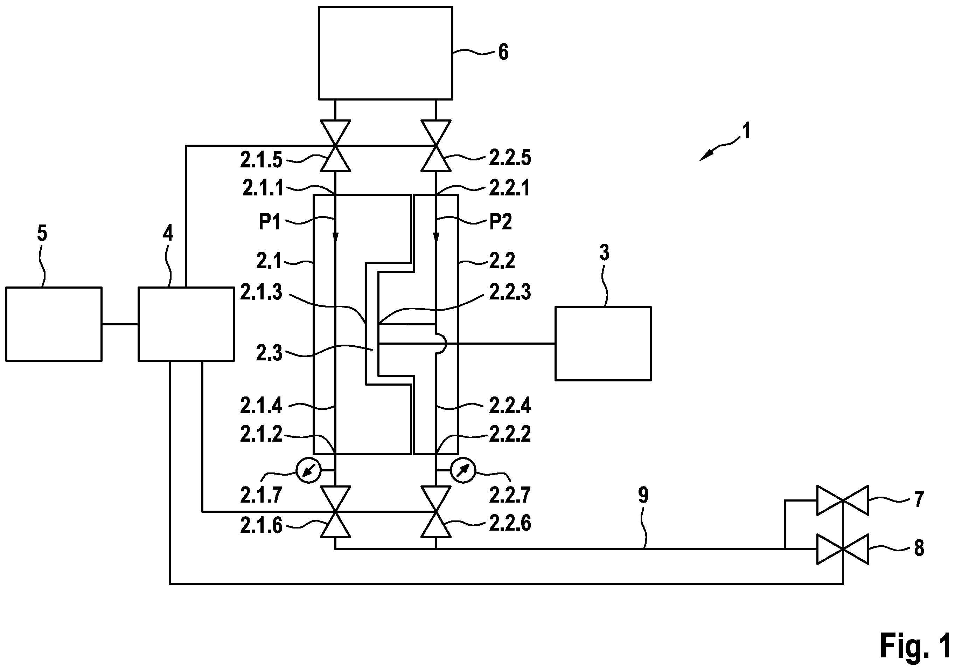

Fig. 1 zeigt eine Prinzipdarstellung einer Vorrichtung 1 zur Verarbeitung von Partikelschaummaterial zur Herstellung eines Partikelschaumformteils gemäß einem Ausführungsbeispiel.

Die auch als Formteilautomat bezeichenbare bzw. bezeichnete Vorrichtung 1 ist zur Verarbeitung eines expandierbaren oder expandierten Partikelschaummaterials, mithin zur Verarbeitung von Kunststoffpartikeln aus wenigstens einem expandierbaren oder expandierten Kunststoffpartikelmaterial, zur Herstellung von Partikelschaumformteilen eingerichtet.

Die Vorrichtung 1 ist entsprechend zur Durchführung einer oder mehrerer Arbeitsprozesse zur Verarbeitung von Partikelschaummaterial zur Herstellung eines Partikelschaumformteils eingerichtet. Der Begriff "Arbeitsprozess" beinhaltet grundsätzlich jedweden vermittels der Vorrichtung 1 durchführbaren Prozess, welcher direkt oder indirekt mit der Verarbeitung eines Partikelschaummaterials zur Herstellung eines Partikelschaumformteils in einem Zusammenhang steht. Vermittels der Vorrichtung 1 durchführbare Arbeitsprozesse sind insbesondere Verarbeitungsprozesse, in welchen eine (eigentliche) Verarbeitung eines Partikelschaummaterials, d. h. insbesondere ein Verbinden von Kunststoffpartikeln unter Ausbildung eines herzustellenden Partikelschaumformteils, erfolgt, oder Bereitstellungsprozesse, in welchen eine Menge an Partikelschaummaterial, insbesondere eine in einem Verarbeitungsprozess zu verarbeitende Menge an Partikelschaummaterial, bereitgestellt wird, oder Förderprozesse, in welchen eine Menge an Partikelschaummaterial, insbesondere eine in einem Verarbeitungsprozess zu verarbeitende Menge an Partikelschaummaterial, entlang einer Förderstrecke (nicht gezeigt) befördert wird, oder Füllprozesse, in welchen eine Menge an Partikelschaummaterial, insbesondere eine in einem Verarbeitungsprozess zu verarbeitende Menge an Partikelschaummaterial, in eine Formwerkzeugkavität 2.3 eines Formwerkzeugs 2 der Vorrichtung 1 eingefüllt wird.

Im Rahmen eines Verarbeitungsprozesses wird ein Arbeits- bzw. Prozessfluid eingesetzt bzw. verwendet, bei welchem es sich um ein, insbesondere flüssiges, dampfförmiges oder gasförmiges, Energieträgermedium, d. h. z. B. um eine Flüssigkeit, d. h. insbesondere Wasser, um Dampf, d. h. insbesondere Heißdampf, oder um ein Gas, welches im Rahmen des Betriebs der Vorrichtung Energie, d. h. insbesondere thermische Energie, kinematische Energie, etc., aufnimmt oder abgibt, handeln kann.

Die Vorrichtung 1 umfasst als beispielhafte Funktionseinheit das bereits erwähnte Formwerkzeug 2, welches zwei über eine nicht gezeigte Antriebseinrichtung zur Überführung des Formwerkzeugs 1 in eine in Fig. 1 beispielhaft angedeutete Schließstellung und in eine in Fig. 1 nicht gezeigte Offenstellung relativ zueinander bewegbar gelagerte, auch als Werkzeughälften bezeichenbare Werkzeugelemente 2.1, 2.2 umfasst. Ersichtlich begrenzen bzw. definieren die Werkzeugelemente 2.1, 2.2 in der Schließstellung eine Formwerkzeugkavität 2.3.

Die Formwerkzeugkavität 2.3 ist über eine eine weitere Funktionseinheit der Vorrichtung 1 bildende, z. B. als Strömungserzeugungseinrichtung ausgebildete oder eine solche umfassende, Befülleinrichtung 3 mit vermittels der Vorrichtung 1, d. h. insbesondere dem Formwerkzeug 2, zur Herstellung eines Partikelschaumformteils zu verarbeitenden Partikelschaummaterial befüllbar.

Die Werkzeugelemente 2.1, 2.2 umfassen jeweils wenigstens eine, gegebenenfalls auch als Einströmöffnung bezeichenbare, erste Öffnung 2.1.1, 2.2.1, über welche ein Prozessfluid bzw. eine Prozessfluidströmung P1, P2 in das jeweilige Werkzeugelement 2.1, 2.2 einströmen kann, und wenigstens eine, gegebenenfalls auch als Ausströmöffnung bezeichenbare, zweite Öffnung 2.1.2, 2.2.2, über welche ein Prozessfluid bzw. eine Prozessfluidströmung P1, P2 aus dem jeweiligen Werkzeugelement 2.1, 2.2 ausströmen kann. Die Werkzeugelemente 2.1, 2.2 umfassen darüber hinaus jeweils wenigstens eine düsenartige bzw. -förmig ausgeführte dritte Öffnung 2.1.3, 2.2.3, über welche eine über die jeweilige erste Öffnung 2.1.1, 2.2.1 in das jeweilige Werkzeugelement 2.1, 2.2 eingeströmte Prozessfluidströmung aus dem jeweiligen Werkzeugelement 2.1, 2.2 in die Formwerkzeugkavität 2.3 ausströmen kann. Insbesondere im Zusammenhang mit jeweiligen dritten Öffnungen 2.1.3, 2.2.3 gilt, dass die Werkzeugelemente 2.1, 2.2 jeweils eine Vielzahl entsprechender dritter Öffnungen 2.1.3, 2.2.3 aufweisen können. Entsprechende dritte Öffnungen 2.1.3, 2.2.3 sind insbesondere im Bereich jeweiliger formgebender Werkzeugelementabschnitte der jeweiligen Werkzeugelemente 2.1, 2.2 angeordnet oder ausgebildet sein.

Die jeweiligen ersten, zweiten und dritten Öffnungen 2.1.1 - 2.1.3, 2.2.1 - 2.2.3 eines jeweiligen Werkzeugelements 2.1, 2.2 sind typischerweise über eine wenigstens einen das jeweilige Werkzeugelement 2.1, 2.2 zumindest abschnittsweise durchsetzenden Strömungskanal (nicht bezeichnet) umfassende Strömungskanalstruktur 2.1.4 2.2.4 strömungstechnisch miteinander verbunden, sodass eine über eine jeweilige erste Öffnung 2.1.1, 2.2.1 in das jeweilige Werkzeugelement 2.1, 2.2 eingeströmte Prozessfluidströmung P1, P2 über eine jeweilige zweite Öffnung 2.1.2, 2.2.2 und/oder über eine jeweilige dritte Öffnung 2.1.3, 2.2.3 aus dem jeweiligen Werkzeugelement 2.1, 2.2 ausströmen kann. Eine entsprechende Strömungskanalstruktur 2.1.4, 2.2.4 kann sich jeweils zumindest abschnittsweise konturnah, d. h. nahe unterhalb jeweiliger formgebender Werkzeugelementabschnitte jeweiliger Werkzeugelemente 2.1, 2.2, erstrecken, etwa um, wenn von einer Prozessfluidströmung P1, P2 durchströmt, einen Energieübertrag von dem jeweiligen Werkzeugelementabschnitt auf das bzw. ein in die Formwerkzeugkavität 2.3 eingefüllte(s) Partikelschaummaterial zu ermöglichen.

Ersichtlich sind in dem in Fig. 1 gezeigten Ausführungsbeispiel jeweiligen werkzeugelementseitigen ersten und zweiten Öffnungen 2.1.1, 2.1.2, 2.2.1, 2.2.2 jeweils wenigstens eine Verschlusseinrichtung 2.1.5, 2.1.6, 2.2.5, 2.2.6 zugeordnet, welche wenigstens ein zwischen einer auch als Offenstellung bezeichenbaren ersten Stellung, in welcher ein Durchströmen der jeweiligen Verschlusseinrichtung 2.1.5, 2.1.6, 2.2.5, 2.2.6 mit einer Prozessfluidströmung P1, P2 möglich ist, und einer auch als Schließstellung bezeichenbaren zweiten Stellung, in welcher ein Durchströmen der jeweiligen Verschlusseinrichtung 2.1.5, 2.1.6, 2.2.5, 2.2.6 mit einer Prozessfluidströmung P1, P2 nicht möglich ist, bewegbares Verschlusselement (nicht gezeigt) umfasst. Ein entsprechendes Verschlusselement kann typischerweise auch in wenigstens eine zwischen einer entsprechenden ersten und zweiten Stellung liegende Zwischenstellung bewegt werden. Entsprechende Verschlusseinrichtungen 2.1.5, 2.1.6, 2.2.5, 2.2.6 können insbesondere als aktive oder passive Strömungsbegrenzungseinrichtungen ausgebildet sein bzw. solche umfassen. Entsprechende aktive oder passive Strömungsbegrenzungseinrichtungen können z. B. als Ventileinrichtungen, insbesondere als steuer- bzw. regelbare Regelventileinrichtungen, ausgebildet sein. In dem in Fig. 1 gezeigten Ausführungsbeispiel sind die Verschlusseinrichtungen 2.1.5, 2.1.6, 2.2.5, 2.2.6 beispielhaft als steuer- bzw. regelbare Regelventileinrichtungen ausgebildet.

Die Vorrichtung 1 umfasst als weitere Funktionseinheit weiterhin eine Prozessfluidaktuatoreinrichtung 4. Die Prozessfluidaktuatoreinrichtung 4 ist zur Steuerung bzw. Regelung des Betriebs einer oder mehrerer der den jeweiligen Werkzeugelementen 2.1, 2.2 zuordenbaren bzw. zugeordneten Verschlusseinrichtungen 2.1.5, 2.1.6, 2.2.5, 2.2.6, 7, 8, insbesondere zur Erzeugung jeweiliger Prozessfluidströmungen P1, P2, eingerichtet. Über eine entsprechende Steuerung bzw. Regelung des Betriebs jeweiliger Verschlusseinrichtungen 2.1.5, 2.1.6, 2.2.5, 2.2.6, 7, 8 lässt sich eine entsprechende erste Prozessfluidströmung P1, welche über eine dritte Öffnung 2.1.3 des bzw. eines ersten Werkzeugelements 2.1 in die Formwerkzeugkavität 2.3 einströmt und über wenigstens eine dritte Öffnung 2.2.3 des bzw. eines zweiten Werkzeugelements 2.2 aus der Formwerkzeugkavität 2.3 ausströmt, und eine entsprechende zweite Prozessfluidströmung P2 , welche über die bzw. eine erste Öffnung 2.2.1 des zweiten Werkzeugelements 2.2 in das zweite Werkzeugelement 2.2 einströmt und über die bzw. eine zweite Öffnung 2.2.2 des zweiten Werkzeugelements 2.2 aus dem zweiten Werkzeugelement 2.2 ausströmt, wobei es nicht in die Formwerkzeugkavität 2.3 einströmt, erzeugen.

Wie sich im Weiteren ergibt, können beide Werkzeugelemente 2.1, 2.2, z. B. zyklusabhängig bzw. -spezifisch, abwechselnd bzw. wechselweise als erstes oder zweites Werkzeugelement betrieben werden.

Die Prozessfluidaktuatoreinrichtung 4 ist über eine entsprechende Steuerung bzw. Regelung des Betriebs entsprechender Verschlusseinrichtungen 2.1.5, 2.1.6, 2.2.5, 2.2.6, 7, 8 ferner zum Einstellen wenigstens eines die Strömungseigenschaften wenigstens einer Prozessfluidströmung P1, P2 beeinflussenden Strömungsparameters, d. h. insbesondere des Drucks bzw. Druckniveaus einer Prozessfluidströmung P1, P2, eingerichtet, insbesondere derart, dass sich die erste und die zweite Prozessfluidströmung P1, P2 in wenigstens einem die Strömungseigenschaften beeinflussenden Strömungsparameter, d. h. insbesondere des Drucks bzw. Druckniveaus, unterscheiden, eingerichtet.

Die Prozessfluidaktuatoreinrichtung 4 umfasst sonach im Allgemeinen jedenfalls funktionell betrachtet diejenigen Funktionseinheiten der Vorrichtung 1, welche zum Einstellen wenigstens eines die Strömungseigenschaften wenigstens einer Prozessfluidströmung P1, P2 beeinflussenden Strömungsparameters, d. h. insbesondere des Drucks bzw. Druckniveaus jeweiliger Prozessfluidströmungen P1, P2, erforderlich sind. Hierzu zählen insbesondere entsprechende jeweiligen Werkzeugelementen 2.1, 2.2 direkt oder indirekt zugeordnete Verschlusseinrichtungen 2.1.5, 2.1.6, 2.2.5, 2.2.6, 7, 8.

Der Prozessfluidaktuatoreinrichtung 4 ist als weitere Funktionseinheit der Vorrichtung 1 eine Computer-implementierte, d. h. insbesondere hardware- und/oder softwaremäßig implementierte, Steuer- und/oder Regeleinrichtung 5 zugeordnet, welche eingerichtet ist, Steuer- bzw. Regelinformationen zur Einstellung wenigstens eines die Strömungseigenschaften wenigstens einer Prozessfluidströmung P1, P2 beeinflussenden Strömungsparameter, d. h. insbesondere des Drucks bzw. Druckniveaus, zu erzeugen, insbesondere derart, dass sich die erste und die zweite Prozessfluidströmung P1, P2 in dem wenigstens einen die Strömungseigenschaften beeinflussenden Strömungsparameter unterscheiden. Hierzu kann die Steuer- und/oder Regeleinrichtung 5 eingerichtet sein, entsprechende Steuer- bzw. Regelinformationen zum Steuern bzw. Regeln des Betriebs jeweiliger Verschlusseinrichtungen 2.1.5, 2.1.6, 2.2.5, 2.2.6, insbesondere derart, dass sich die erste und die zweite Prozessfluidströmung P1, P2 in dem wenigstens einen die Strömungseigenschaften beeinflussenden Strömungsparameter unterscheiden, zu erzeugen.

Die Vorrichtung 1 umfasst als weitere Funktionseinheit weiterhin eine Prozessfluidbereitstellungseinrichtung 6, welche eingerichtet ist, wahlweise dem ersten Werkzeugelement 2.1 ein Prozessfluid zur Ausbildung der ersten Prozessfluidströmung P1 bereitzustellen und/oder dem zweiten Werkzeugelement 2.2 ein Prozessfluid zur Ausbildung der zweiten Prozessfluidströmung P2 bereitzustellen. Die Prozessfluidbereitstellungseinrichtung 6 kann z. B. eine Behältereinrichtung umfassen, welche mit, gegebenenfalls auf eine bestimmte Temperatur und/oder einen bestmimten Druck konditioniertem, Prozessfluid zur Bereitstellung an das erste und/oder zweite Werkzeugelement 2.1, 2.2 gefüllt ist.

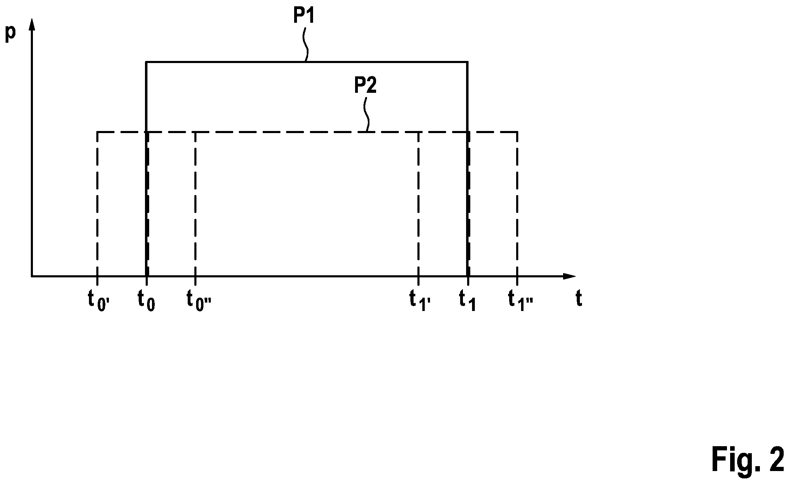

Mit der in Fig. 1 beispielhaft gezeigten Konfiguration der Vorrichtung 1 lässt sich ein Verfahren zur Verarbeitung von Partikelschaummaterial zur Herstellung eines Partikelschaumformteils implementieren. Ein Ausführungsbeispiel eines entsprechenden Verfahrens wird nachfolgend unter Bezugnahme auf die Fig. 1, 2 beispielhaft erläutert:
Das Verfahren beinhaltet einen ersten Schritt des Erzeugens einer durch die bzw. eine entsprechende Formwerkzeugkavität 2.3 durchströmenden ersten Prozessfluidströmung P1, d. h. z. B. einer Dampf- bzw. Heißdampfströmung. Die erste Prozessfluidströmung P1 strömt über die düsenartige bzw. -förmige dritte Öffnung 2.1.3 des ersten Werkzeugelements 2.1 in die Formwerkzeugkavität 2.3 ein und über die düsenartige bzw. -förmige dritte Öffnung 2.2.3 des zweiten Werkzeugelements 2.2 aus der Formwerkzeugkavität 2.3 aus. In dem ersten Schritt des Verfahrens erfolgt sonach ein so genanntes Querbedampfen der hierbei typischerweise nahezu oder vollständig geschlossenen Formwerkzeugkavität 2.3, d. h. die erste Prozessfluidströmung P1 strömt in das erste Werkzeugelement 2.1 über jeweilige erste Öffnungen 2.2.1 des ersten Werkzeugelements 2.1 ein, strömt über die dritte Öffnung 2.1.3 des ersten Werkzeugelements 2.1 aus dem ersten Werkzeugelement 2.1 in die Formwerkzeugkavität 2.3 aus, durchströmt die Formwerkzeugkavität 2.3 in Richtung des zweiten Werkzeugelements 2.2, wobei ein Verbinden des in der Formwerkzeugkavität 2.3 befindlichen Partikelschaummaterials unter Ausbildung des herzustellenden Partikelschaumformteils erfolgt, strömt über jeweilige dritte Öffnungen 2.2.3 des zweiten Werkzeugelements 2.2 in das zweite Werkzeugelement 2.2 ein und strömt aus dem zweiten Werkzeugelement 2.2 über jeweilige zweite Öffnungen 2.2.2 des zweiten Werkzeugelements 2.2 aus.

Gleichermaßen beinhaltet das Verfahren einen zweiten Schritt des Erzeugens einer zweiten Prozessfluidströmung P2, d. h. z. B. einer Dampf- bzw. Heißdampfströmung. Die zweite Prozessfluidströmung P2 strömt über jeweilige erste Öffnungen 2.2.1 des zweiten Werkzeugelements 2.2 in das zweite Werkzeugelement 2.2 ein und strömt über jeweilige zweite Öffnungen 2.2.2 des zweiten Werkzeugelements 2.2 aus dem zweiten Werkzeugelement 2.2 aus. Mithin wird in dem zweiten Schritt des Verfahrens parallel zu dem in dem ersten Schritt des Verfahrens erfolgenden Querbedampfen eine das zweite Werkzeugelement 2.2 zwischen jeweiligen ersten und zweiten Öffnungen 2.2.1, 2.2.2 durchströmende zweite Prozessfluidströmung p2 erzeugt, sodass über die zweite Prozessfluidströmung P2 während des Querbedampfens gezielt zusätzliche Energie in das zweite Werkzeugelement 2.2 eingebracht wird. Bei dem zweiten Schritt des Verfahrens handelt es sich nicht um ein zweites Querbedampfen der Formwerkzeugkavität 2.3 ausgehend von dem zweiten Werkzeugelement 2.2, als die zweite Prozessfluidströmung P2 das zweite Werkzeugelement 2.2 nur zwischen jeweiligen ersten und zweiten Öffnungen 2.2.1, 2.2.2 des zweiten Werkzeugelements 2.2 durchströmt, nicht jedoch über entsprechende düsenartige bzw. -förmige dritte Öffnung 2.2.3 des zweiten Werkzeugelements 2.2 in die Formwerkzeugkavität 2.3 ausströmt.

Wie anhand von Fig. 2 ersichtlich, werden der erste und der zweite Schritt verfahrensgemäß typischerweise gleichzeitig durchgeführt. Die Bezeichnung "erster Schritt" und "zweiter Schritt" deuten sonach nicht an, dass die Schritte zeitlich aufeinander folgend durchgeführt werden, sondern dass es sich hier um jeweilige Schritte der Erzeugung entsprechender erster und zweiter Prozessfluidströmungen P1, P2 handelt.

Verfahrensgemäß unterscheiden sich die erste und die zweite Prozessfluidströmung P1, P2 in wenigstens einem die Strömungseigenschaften beeinflussenden Strömungsparameter, d. h. insbesondere dem Druck bzw. Druckniveau. Die verfahrensgemäß über die bzw. eine Steuerungs- und/oder Regelungseinrichtung 5 gezielt mögliche Einstellung, d. h. insbesondere Steuerung bzw. Regelung, jeweiliger die Strömungseigenschaften der ersten und zweiten Prozessfluidströmung P1, P2 beeinflussender Strömungsparameter erfolgt sonach mit der Maßgabe, dass sich die erste und die zweite Prozessfluidströmung P1, P2 in wenigstens einem die Strömungseigenschaften beeinflussenden Strömungsparameter unterscheiden. Durch diese gezielte Abstimmung der Strömungsparameter bzw. -eigenschaften der Prozessfluidströmungen P1, P2 aufeinander, kann sichergestellt werden, dass sich die erste und zweite Prozessfluidströmung P1, P2 nicht gegenseitig beeinträchtigen. Insbesondere kann durch diese gezielte Abstimmung der Strömungsparameter bzw. -eigenschaften der Prozessfluidströmungen P1, P2 aufeinander sichergestellt werden, dass die zweite Prozessfluidströmung P2 die die Formwerkzeugkavität 2.3 durchströmende erste Prozessfluidströmung P1 und somit das durch die erste Prozessfluidströmung P1 erfolgende bzw. herbeigeführte Verbinden des Partikelschaummaterials zur Herstellung eines jeweiligen Partikelschaumformteils nicht negativ beeinflusst.

Das Verfahren beruht sonach auf dem Prinzip des zu dem Erzeugen einer entsprechenden ersten Prozessfluidströmung P1 zusätzlich erfolgenden Erzeugens einer entsprechenden zweiten Prozessfluidströmung P2, was sich deutlich positiv auf die Effizienz des Verarbeitungsprozesses und somit auf die Effizienz des gesamten Verfahrens auswirkt, als die dem zweiten Werkzeugelement 2.2 durch die zweite Prozessfluidströmung P2 zusätzlich zugeführte thermische Energie die Effizienz des Energieeintrags respektive der Energieeinbringung im Rahmen des Verbindungsvorgangs jeweiliger Partikelschaummaterialien zu Partikelschaumformteilen erhöht und damit verbunden die Reduzierung von Zykluszeiten ermöglicht.

Wie erwähnt, ist der die Strömungseigenschaften beeinflussende Strömungsparameter insbesondere der Druck bzw. das Druckniveau der ersten und zweiten Prozessfluidströmung P1, P2. Mithin erfolgt die verfahrensgemäß über die Steuerungs- und/oder Regelungseinrichtung 5 gezielt mögliche Steuerung bzw. Regelung insbesondere des Drucks bzw. Druckniveaus der ersten und zweiten Prozessfluidströmung P1, P2 sonach mit der Maßgabe, dass sich die erste und die zweite Prozessfluidströmung P1, P2 in ihrem jeweiligen Druck bzw. Druckniveau unterscheiden. Die Erfassung des Drucks bzw. Druckniveaus der Prozessfluidströmungen P1, P2 kann über Druckerfassungseinrichtungen 2.1.7, 2.2.7, wie z. B. Drucksensoren, erfolgen. Entsprechende Druckerfassungseinrichtungen 2.1.7, 2.2.7 können an oder in jeweiligen Werkzeugelementen 2.1, 2.2 angeordnet oder ausgebildet sein. Insbesondere können entsprechende Druckerfassungseinrichtungen 2.1.7, 2.2.7, wie in Fig. 1 beispielhaft gezeigt, an oder im Bereich jeweiliger zweiter Öffnungen 2.1.2, 2.2.2 der Werkzeugelemente 2.1, 2.2 angeordnet oder ausgebildet sein. Der Druck bzw. Druckniveau jeweiliger Prozessfluidströmungen P1, P2 kann sich sonach beispielsweise auf den Druck bzw. das Druckniveau bei Ausströmen der jeweiligen Prozessfluidströmungen P1, P2 aus den Werkzeugelementen 2.1, 2.2 beziehen.

Verfahrensgemäß weist die zweite Prozessfluidströmung P2 typischerweise einen geringeren Druck als die erste Prozessfluidströmung P1 auf. Derart kann sichergestellt werden, dass die zweite Prozessfluidströmung P2 die erste Prozessfluidströmung P1 nicht beeinträchtigt, etwa indem die zweite Prozessfluidströmung P2 aufgrund eines zu hohen Drucks ein Ausströmen der ersten Prozessfluidströmung P1 aus der Formwerkzeugkavität 2.3 über die dritte Öffnung 2.2.3 des zweiten Werkzeugelements 2.2 bzw. ein Einströmen der ersten Prozessfluidströmung P1 in das zweite Werkzeugelement 2.2 über die dritte Öffnung 2.2.3 des zweiten Werkzeugelements 2.2 behindert. Der Druck bzw. das Druckniveau der zweiten Prozessfluidströmung P2 kann, insbesondere so relativ zu dem Druck bzw. Druckniveau der ersten Prozessfluidströmung P1, insbesondere nach Durchströmen der Formwerkzeugkavität 2.3, gewählt sein, dass durch die zweite Prozessfluidströmung P2 gegebenenfalls eine gewisse Sogwirkung erzeugt wird, welche das Durchströmen der Formwerkzeugkavität 2.3 mit der ersten Prozessfluidströmung P1 begünstigt.

Die zweite Prozessfluidströmung P2 weist zweckmäßig einen um Faktor 2 geringeren Druck als die erste Prozessfluidströmung P1 auf. Dies ist jedoch rein beispielhaft zu verstehen. Der Druck bzw. das Druckniveau der zweiten Prozessfluidströmung P2 kann z. B. das 0,95-fache, das 0,9-fache, das 0,85-fache, das 0,8-fache, das 0,75-fache, das 0,7-fache, das 0,65-fache, das 0,6-fache das 0,55-fache, das 0,5-fache das 0,45-fache, das 0,4-fache, das 0,35-fache, das 0,3-fache das 0,25-fache, das 0,2-fache das 0,15-fache, das 0,1-fache oder das 0,05-fache des Drucks bzw. Druckniveaus der ersten Prozessfluidströmung P1 betragen.

Die entsprechenden Druckunterschiede zwischen der ersten und der zweiten Prozessfluidströmung P1, P2 können verfahrensgemäß gegebenenfalls dynamisch positiv oder negativ, mithin nach oben und/oder unten, angepasst bzw. eingestellt, d. h. insbesondere gesteuert bzw. geregelt, werden. Grundsätzlich ist somit die Realisierung verschiedener, gegebenenfalls variabler, Druckunterschiedsprofile denkbar, welche typischerweise in Abhängigkeit von Eigenschaften des zu verarbeitenden Partikelschaummaterials, wie z. B. der chemischen und/oder physikalischen Zusammensetzung des Partikelschaummaterials, und/oder von Eigenschaften der Konfiguration des Formwerkzeugs, wie z. B. der Größe der Formwerkzeugkavität, etc. ausgewählt sind.

Das verfahrensgemäß erfolgende Erzeugen einer entsprechenden ersten Prozessfluidströmung P1 beinhaltet für eine wie in Fig. 1 konfigurierte Vorrichtung 1 bezüglich des jeweiligen ersten Werkzeugelements 2.1 sonach, dass die erste Öffnung 2.1.1 des ersten Werkzeugelements 2.1 zum Einströmen der ersten Prozessfluidströmung P1 über die erste Öffnung 2.1.1 in das erste Werkzeugelement 2.1 freigegeben ist bzw. wird; mithin ist bzw. wird das Verschlusselement der der ersten Öffnung 2.1.1 des ersten Werkzeugelements 2.1 zugeordneten Verschlusseinrichtung 2.1.5 in die bzw. eine Offenstellung bewegt, in welcher die Verschlusseinrichtung 2.1.5 durchströmbar ist. Gleichermaßen ist bzw. wird die zweite Öffnung 2.1.2 des ersten Werkzeugelements 2.1 zum Ausströmen der ersten Prozessfluidströmung P1 aus dem ersten Werkzeugelement 2.1 über die zweite Öffnung 2.1.2 nicht freigegeben; mithin ist bzw. wird das Verschlusselement der der zweiten Öffnung 2.1.2 des ersten Werkzeugelements 2.1 zugeordneten Verschlusseinrichtung 2.1.6 in die bzw. eine Schließstellung bewegt. Die über die erste Öffnung 2.1.1 in das erste Werkzeugelement 2.1 eingeströmte erste Prozessfluidströmung P1 strömt sonach über die dritte Öffnung 2.1.3 des ersten Werkzeugelements 2.1 aus dem ersten Werkzeugelement 2.1 in die mit Partikelschaummaterial gefüllte Formwerkzeugkavität 2.3 aus. Nachdem die erste Prozessfluidströmung P1 die mit Partikelschaummaterial gefüllte Formwerkzeugkavität 2.3 durchströmt hat, strömt die erste Prozessfluidströmung P1 über die dritte Öffnung 2.2.3 des zweiten Werkzeugelements 2.2 in das zweite Werkzeugelement 2.2 ein und über die zweite Öffnung 2.2.2 des zweiten Werkzeugelements 2.2 aus dem zweiten Werkzeugelement 2.2 aus.

Das verfahrensgemäß erfolgende Erzeugen einer die Formwerkzeugkavität 2.3 durchströmenden ersten Prozessfluidströmung P1 beinhaltet für eine wie in Fig. 1 konfigurierte Vorrichtung 1 bezüglich des jeweiligen zweiten Werkzeugelements 2.2 sonach, dass die zweite Öffnung 2.2.2 des zweiten Werkzeugelements 2.2 zum Ausströmen der ersten Prozessfluidströmung P1 über die zweite Öffnung 2.2.2 aus dem zweiten Werkzeugelement 2.2 freigegeben ist bzw. wird; mithin ist bzw. wird das Verschlusselement der der zweiten Öffnung 2.2.2 des zweiten Werkzeugelements 2.2 zugeordneten Verschlusseinrichtung 2.2.6 in die Offenstellung bewegt. Die über die dritte Öffnung 2.2.3 des zweiten Werkzeugelements 2.2 in das zweite Werkzeugelement 2.2 eingeströmte erste Prozessfluidströmung P1 strömt sonach über die zweite Öffnung 2.2.2 des zweiten Werkzeugelements 2.2 aus dem zweiten Werkzeugelement 2.2 aus.

Die vorstehenden Ausführungen gelten selbstverständlich analog für Konfigurationen jeweiliger Werkzeugelemente 2.1, 2.2 mit mehreren ersten und/oder zweiten und/oder dritten Öffnungen, 2.1.1 - 2.1.3, 2.2.1 - 2.2.3.

Im Rahmen der Durchführung des Verfahrens kann die erwähnte Prozessfluidbereitstellungseinrichtung 6 wahlweise dem ersten Werkzeugelement 2.1 ein Prozessfluid zur Ausbildung der ersten Prozessfluidströmung P1 bereitstellen und/oder dem zweiten Werkzeugelement 2.2 ein Prozessfluid zur Ausbildung der zweiten Prozessfluidströmung P2 bereitstellen.

Ausgehend von der in Fig. 1 gezeigten Konfiguration mit wenigstens einer Verschlusseinrichtung 2.1.6, 2.2.6, d. h., wie erwähnt, z. B. einer Ventil- bzw. Regelventileinrichtung, konfigurierten Werkzeugelementen, kann verfahrensgemäß mehrere den jeweiligen werkzeugelementseitigen zweiten Verschlusseinrichtungen 2.1.6, 2.2.6 nachgeschaltet angeordnete weitere regelbare Verschlusseinrichtungen 7, 8 verwendet werden. Diese auch als "dritte Regelventileinrichtung" bzw. "vierte Regelventileinrichtung" bezeichenbaren, parallel angeordneten weiteren Verschlusseinrichtungen 7, 8 sind den jeweiligen werkzeugelementseitigen zweiten Verschlusseinrichtungen 2.1.6, 2.2.6 gemeinsam zugeordnet, sodass die jeweiligen werkzeugelementseitigen zweiten Verschlusseinrichtungen 2.1.6, 2.2.6 mit den weiteren Verschlusseinrichtungen 7, 8 über eine gemeinsame Leitungsverbindung 9 strömungstechnisch verbindbar oder verbunden sind.

Verfahrensgemäß kann der Betrieb einer der weiteren Verschlusseinrichtungen 7, 8, bei welchen es sich im Übrigen ebenso um regelbare Ventil- bzw. Regelventileinrichtungen handeln kann, geregelt werden, um den Druck bzw. das Druckniveau innerhalb des zweiten Werkzeugelements 2.2 und somit den Druck bzw. das Druckniveau einer das zweite Werkzeugelement 2.2 durchströmenden Prozessfluidströmung P1, P2 einzustellen, d. h. insbesondere zu steuern bzw. regeln. Derart ist eine zusätzliche Möglichkeit der Einstellung des Drucks bzw. Druckniveaus einer das zweite Werkzeugelement 2.2 durchströmenden Prozessfluidströmung P1, P2 gegeben. Eine entsprechende Regelung des Drucks bzw. Druckniveaus innerhalb des zweiten Werkzeugelements 2.2 bzw. einer das zweite Werkzeugelement 2.2 durchströmenden Prozessfluidströmung P1, P2 ist insbesondere mit einer in Fig. 1 gezeigten Konfiguration der Vorrichtung 1 möglich, wobei eine z. B. als dritte Verschlusseinrichtung 7 bezeichenbare weitere Verschlusseinrichtung als Hauptventil- bzw. Hauptregelventileinrichtung verwendet werden kann und eine parallel dazu angeordnete, als vierte Verschlusseinrichtung bezeichenbare weitere Verschlusseinrichtung 8 als Steuer- oder Regelventileinrichtung für die Steuerung bzw. Regelung des Drucks bzw. Druckniveaus innerhalb des ersten und/oder zweiten Werkzeugelements 2.1, 2.2 verwendet werden kann.

Der Betrieb der dritten und/oder vierten Verschlusseinrichtung 7, 8 kann ebenso eingestellt, d. h. insbesondere gesteuert oder geregelt, werden, um den Druck bzw. das Druckniveau innerhalb einer jeweiligen werkzeugelementseitigen zweiten Ventil- bzw. Regelventileinrichtung 2.1.6, 2.2.6 einzustellen. Insbesondere kann der Betrieb der dritten und/oder vierten Verschlusseinrichtung 7, 8 eingestellt, d. h. insbesondere gesteuert oder geregelt, werden, um den Druck bzw. das Druckniveau zweiten Verschlusseinrichtung 2.2.6 des zweiten Werkzeugelements 2.2 einzustellen. Die Einstellung des Drucks bzw. -Druckniveaus innerhalb des zweiten Werkzeugelements 2.2 kann insbesondere erfolgen, wenn die dem ersten Werkzeugelement 2.1 zugeordnete zweite Verschlusseinrichtung 2.1.6 geschlossen ist. In analoger Weise kann die Einstellung des Drucks bzw. Druckniveaus innerhalb des ersten Werkzeugelements 2.1 erfolgen, wenn die dem zweiten Werkzeugelement 2.2 zugeordnete zweite Verschlusseinrichtung 2.2.6 geschlossen ist.

Verfahrensgemäß können die Werkzeugelemente, insbesondere für unterschiedliche Bedampfungsvorgänge, innerhalb welcher jeweils die erste und zweite Prozessfluidströmung erzeugt wird, wechselweise als erstes Werkzeugelement und als zweites Werkzeugelement verwendet und demnach wechselweise von einer ersten und einer zweiten Prozessfluidströmung durchströmt werden. Derart lässt sich eine so genannte "Wechselbedampfung" realisieren, welche, über einen kompletten Verarbeitungsprozess zu Herstellung eines Partikelschaumformteils hinweg betrachtet, insgesamt ein weitgehend homogenes Durchströmen des innerhalb der Formwerkzeugkavität befindlichen und unter Ausbildung eines Partikelschaumformteils zu verarbeitenden Partikelschaummaterials ermöglicht, was sich typischerweise positiv auf die Eigenschaften des herzustellenden Partikelschaumformteils auswirkt.

Anhand von Fig. 2 seien nochmals verschiedene Varianten des Verfahrens erläutert: Wie erwähnt, strömen die erste und die zweite Prozessfluidströmung, typischerweise gleichzeitig durch die jeweiligen Werkzeugelemente 2.1, 2.2. Anfangs- und Endzeitpunkte der ersten und zweiten Prozessfluidströmung können dabei, wie in Fig. 2 mit durchgezogener Linie dargestellt, zusammenfallen. Mit anderen Worten wird die zweite Prozessfluidströmung P2 verfahrensgemäß typischerweise erzeugt, wenn auch die erste Prozessfluidströmung P1 erzeugt wird.

Wie in Fig. 2, welche ein Diagramm mit einem zeitlichen Druckverlauf erster und zweiter Prozessfluidströmungen P1, P2, wobei der Druck p auf der y-Achse und die Zeit t auf der x-Achse aufgetragen ist, zeigt, ebenso durch die strichlierten Linien dargestellt ist, kann der Anfangs- und/oder Endzeitpunkt der zweiten Prozessfluidströmung P2 jedoch auch zu dem Anfangszeitpunk t₀ und/oder dem Endzeitpunkt t₁ der ersten Prozessfluidströmung P1 zeitlich versetzt sein. Ein zeitlich nach vorne versetzter Anfangszeitpunkt der zweiten Prozessfluidströmung P2 ist in Fig. 2 bei dem Zeitpunkt t_{0'} angedeutet, ein zeitlich nach hinten versetzter Anfangszeitpunkt der zweiten Prozessfluidströmung P2 ist in Fig. 2 bei dem Zeitpunkt t_{0"} angedeutet. Ein zeitlich nach vorne versetzter Endzeitpunkt der zweiten Prozessfluidströmung P2 ist in Fig. 2 bei dem Zeitpunkt t_{1'} angedeutet, ein zeitlich nach hinten versetzter Anfangszeitpunkt der zweiten Prozessfluidströmung P2 ist in Fig. 2 bei dem Zeitpunkt t_{1"} angedeutet

Anhand von Fig. 2 ist ersichtlich, dass die beiden Prozessfluidströmungen P1, P2 je nach Verarbeitungsprozess, d. h. insbesondere in Abhängigkeit von Parametern des zu verarbeitenden Partikelschaummaterials, wie z. B. dessen chemischer und/oder physikalischer Konfiguration, Menge, etc., und/oder in Abhängigkeit von Parametern des herzustellenden Partikelschaumformteils, wie z. B. dessen Geometrie, Volumen, etc., für einen bestimmten Zeitraum, z. B. einen Zeitraum zwischen 0,2 s und 60 s, gleichzeitig bzw. parallel strömen. Die Dauer des gleichzeitigen bzw. parallelen Erzeugens bzw. Strömens der Prozessfluidströmungen P1, P2 bestimmt sich sonach typischerweise in Abhängigkeit entsprechender partikelschaummaterial- bzw. partikelschaumformteilspezifischer Parameter.

## Patentansprüche

1. Verfahren zur Verarbeitung von Partikelschaummaterial zur Herstellung eines Partikelschaumformteils, umfassend:
- Erzeugen einer eine durch zwei Werkzeugelemente (2.1, 2.2) definierte Formwerkzeugkavität (2.3) durchströmenden ersten Prozessfluidströmung (P1), wobei die erste Prozessfluidströmung (P1) über wenigstens eine Öffnung (2.1.3) eines ersten Werkzeugelements (2.1) in die Formwerkzeugkavität (2.3) einströmt und über wenigstens eine Öffnung (2.2.3) eines zweiten Werkzeugelements (2.2) aus der Formwerkzeugkavität (2.3) ausströmt; und
- Erzeugen einer zweiten Prozessfluidströmung (P2), wobei die zweite Prozessfluidströmung (P2) über wenigstens eine Öffnung (2.2.1) des zweiten Werkzeugelements (2.2) in das zweite Werkzeugelement (2.2) einströmt und über wenigstens eine Öffnung (2.2.2) des zweiten Werkzeugelements (2.2) aus dem zweiten Werkzeugelement (2.2) ausströmt, wobei
sich die erste und die zweite Prozessfluidströmung (P1, P2) in wenigstens einem die Strömungseigenschaften beeinflussenden Strömungsparameter unterscheiden, **dadurch gekennzeichnet, dass**
die erste und die zweite Prozessfluidströmung (P1, P2) gleichzeitig durch die Formwerkzeugkavität (2.3) strömen.

2. Verfahren nach Anspruch 1, **dadurch gekennzeichnet, dass** der wenigstens eine die Strömungseigenschaften beeinflussende Strömungsparameter der Druck der Prozessfluidströmungen (P1, P2) ist.

3. Verfahren nach Anspruch 1 oder 2, **dadurch gekennzeichnet, dass** die zweite Prozessfluidströmung (P2) einen, insbesondere mindestens um Faktor 2, geringeren Druck als die erste Prozessfluidströmung (P1) aufweist.

4. Verfahren nach einem der vorhergehenden Ansprüche, **dadurch gekennzeichnet, dass** die erste und die zweite Prozessfluidströmung (P1, P2) über wenigstens eine Prozessfluidbereitstellungseinrichtung (6) bereitgestellt werden, wobei eine Prozessfluidbereitstellungseinrichtung (6) verwendet wird, welche eingerichtet ist, wahlweise dem ersten Werkzeugelement (2.1) ein Prozessfluid zur Ausbildung der ersten Prozessfluidströmung (P1) bereitzustellen und/oder dem zweiten Werkzeugelement (2.2) ein Prozessfluid zur Ausbildung der zweiten Prozessfluidströmung (P2) bereitzustellen.

5. Verfahren nach einem der vorhergehenden Ansprüche, **dadurch gekennzeichnet, dass** ein erstes Werkzeugelement (2.1) verwendet wird, welches eine sich zwischen wenigstens einer Einströmöffnung und wenigstens einer Ausströmöffnung erstreckend angeordnete oder ausgebildete, von einer Prozessfluidströmung (P1, P2) durchströmbare bzw. durchströmte Strömungskanalstruktur (2.1.4) umfasst, wobei der wenigstens einen Einströmöffnung wenigstens eine erste Verschlusseinrichtung (2.1.5) und der wenigstens einen Ausströmöffnung wenigstens eine zweite Verschlusseinrichtung (2.1.6) zugeordnet ist, und ein zweites Werkzeugelement (2.2) verwendet wird, welches eine sich zwischen wenigstens einer Einströmöffnung und wenigstens einer Ausströmöffnung erstreckend angeordnete oder ausgebildete, von einer Prozessfluidströmung (P1, P2) durchströmbare bzw. durchströmte Strömungskanalstruktur (2.2.4) umfasst, wobei der wenigstens einen Einströmöffnung wenigstens eine erste Verschlusseinrichtung (2.1.5) und der wenigstens einen Ausströmöffnung wenigstens eine zweite Verschlusseinrichtung (2.2.6) zugeordnet ist.

6. Verfahren nach Anspruch 5, **dadurch gekennzeichnet, dass** wenigstens eine den jeweiligen zweiten Verschlusseinrichtungen (2.1.6, 2.2.6), insbesondere Ventileinrichtungen, nachgeschaltet angeordnete weitere Verschlusseinrichtung (7, 8), insbesondere regelbare Ventileinrichtung, verwendet wird.

7. Verfahren nach Anspruch 6, **dadurch gekennzeichnet, dass** mehrere den jeweiligen zweiten Verschlusseinrichtungen (2.1.6, 2.2.6), insbesondere Ventileinrichtungen, nachgeschaltet angeordnete regelbare Verschlusseinrichtungen (7, 8), insbesondere Ventileinrichtungen, verwendet werden, wobei die mehreren Verschlusseinrichtungen (7, 8) parallel geschaltet angeordnet oder ausgebildet sind.

8. Verfahren nach einem der Ansprüche 6 oder 7, **dadurch gekennzeichnet, dass** der Betrieb wenigstens einer weiteren Verschlusseinrichtung (7, 8) geregelt wird, um das Druckniveau innerhalb des ersten und/oder zweiten Werkzeugelements (2.1, 2.2) zu regeln.

9. Verfahren nach Anspruch 8, **dadurch gekennzeichnet, dass** der Betrieb der wenigstens einen weiteren Verschlusseinrichtung (7, 8) geregelt wird, um das Druckniveau innerhalb der zweiten Verschlusseinrichtung (2.1.6, 2.2.6) des zweiten Werkzeugelements (2.2) zu regeln, wobei die Regelung des Druckniveaus innerhalb des zweiten Werkzeugelements (2.2) erfolgt, wenn die dem ersten Werkzeugelement (2.1) zugeordnete zweite Verschlusseinrichtung (2.1.6, 2.2.6) geschlossen ist.

10. Verfahren nach einem der vorhergehenden Ansprüche, **dadurch gekennzeichnet, dass** die erste und die zweite Prozessfluidströmung (P1, P2) für einen Zeitraum zwischen 0,2 s und 60 s gleichzeitig durch die Formwerkzeugkavität (2.3) strömen.

11. Verfahren nach einem der vorhergehenden Ansprüche, **dadurch gekennzeichnet, dass** als das die jeweiligen Prozessfluidströmung (P1, P2) bildende Prozessfluid Dampf, insbesondere Heißdampf, verwendet wird.

12. Verfahren nach einem der vorhergehenden Ansprüche, **dadurch gekennzeichnet, dass** die Werkzeugelemente (2.1, 2.2), insbesondere für unterschiedliche Bedampfungsvorgänge der Formwerkzeugkavität (2.3), innerhalb welcher jeweils eine entsprechende erste und eine entsprechende zweite Prozessfluidströmung (P1, P2) erzeugt wird, wechselweise als erstes Werkzeugelement (2.1) und als zweites Werkzeugelement (2.2) verwendet werden.

13. Vorrichtung (1) zur Verarbeitung von Partikelschaummaterial zur Herstellung eines Partikelschaumformteils, wobei die Vorrichtung (1) zur Durchführung eines Verfahrens nach einem der Ansprüche 1 bis 12 eingerichtet ist und umfasst:
- ein erstes Werkzeugelement (2.1) und ein zweites Werkzeugelement (2.2), wobei das erste und das zweite Werkzeugelement (2.1, 2.2), insbesondere durch wenigstens eine Bewegung relativ zueinander, eingerichtet sind, eine Formwerkzeugkavität (2.3) zu definieren, wobei
das erste Werkzeugelement (2.1) wenigstens eine Öffnung (2.1.3) aufweist, über welches eine Prozessfluidströmung (P1, P2) über das erste Werkzeugelement (2.1) in die Formwerkzeugkavität (2.3) einströmbar ist, und
das zweite Werkzeugelement (2.2) wenigstens eine Öffnung (2.2.3) aufweist, über welches eine Prozessfluidströmung (P1, P2) aus der Formwerkzeugkavität (2.3) in das zweite Werkzeugelement (2.2) einströmbar ist, und wenigstens eine Öffnung (2.2.3) aufweist, über welche eine Prozessfluidströmung (P1, P2) aus dem zweiten Werkzeugelement (2.2) ausströmbar ist;
- eine Prozessfluidaktuatoreinrichtung (4), welche zur Steuerung oder Regelung des Betriebs einer oder mehrerer den jeweiligen Werkzeugelementen (2.1, 2.2) zuordenbaren bzw. zugeordneten Verschlusseinrichtungen (2.1.5, 2.1.6, 2.2.5, 2.2.6, 7, 8),
zum Erzeugen einer die Formwerkzeugkavität (2.3) durchströmenden ersten Prozessfluidströmung (P1) eingerichtet ist, wobei die erste Prozessfluidströmung (P1) über wenigstens eine Öffnung (2.1.3) des ersten Werkzeugelements (2.1) in die Formwerkzeugkavität (2.3) einströmt und über wenigstens eine Öffnung (2.2.3) des zweiten Werkzeugelements (2.2) aus der Formwerkzeugkavität (2.3) ausströmt; und
zum Erzeugen einer das zweite Werkzeugelement (2.2) durchströmenden zweiten Prozessfluidströmung (P2) eingerichtet ist, wobei die zweite Prozessfluidströmung (P2) über wenigstens eine Öffnung (2.2.1) des zweiten Werkzeugelements (2.2) in das zweite Werkzeugelement (2.2) einströmt und über wenigstens eine Öffnung (2.2.2) des zweiten Werkzeugelements (2.2) aus dem zweiten Werkzeugelement (2.2) ausströmt, sowie
zur Einstellung wenigstens eines die Strömungseigenschaften wenigstens einer Prozessfluidströmung (P1, P2) beeinflussenden Strömungsparameters eingerichtet ist, insbesondere derart, dass sich die erste und die zweite Prozessfluidströmung (P1, P2) in wenigstens einem die Strömungseigenschaften beeinflussenden Strömungsparameter unterscheiden, eingerichtet ist, wobei die erste und die zweite Prozessfluidströmung (P1, P2) gleichzeitig durch die Formwerkzeugkavität (2.3) strömen.

## Claims

1. A method for processing particular foam material for producing a particular foam part, comprising:
- generating a first process fluid flow (P1) passing through two tool elements (2.1, 2.2), wherein the first process fluid flow (P1) flows through at least one opening (2.1.3) of a first tool element (2.1) into the mold tool cavity (2.3) and flows out of the mold tool cavity (2.3) via at least one opening (2.2.3) of a second tool element (2.2); and
- generating a second process fluid flow (P2), wherein the second process fluid flow (P2) flows into the second tool element (2.2) via at least one opening (2.2.1) of the second tool element (2.2) and flows out of the second tool element (2.2) via at least one opening (2.2.2) of the second tool element (2.2), wherein
the first and the second process fluid flow (P1, P2) differ in at least one flow parameter affecting the flow properties, **characterized in that**
the first and second process fluid flows (P1, P2) simultaneously through the mold cavity (2.3).

2. The method of claim 1, **characterized in that** the at least one flow parameter affecting the flow properties is the pressure of the process fluid flows (P1, P2).

3. The method of claim 1 or 2, **characterized in that** the second process fluid flow (P2) has a, in particular at least by a factor of 2, lower pressure than the first process fluid flow (P1).

4. The method according to one of the preceding claims, **characterized in that** the first and the second process fluid flow (P1, P2) are provided via at least one process fluid supply device (6), wherein a process fluid supply device (6) is used, which is configured to optionally provide the first tool element (2.1) a process fluid for forming the first process fluid flow (P1) and / or to provide the second tool element (2.2) a process fluid for forming the second process fluid flow (P2).

5. The method according to any one of the preceding claims, **characterized in that** a first tool element (2.1) is used, which comprises a flow channel structure (2.1.4) extending between at least one inflow opening and at least one outflow opening, arranged or formed by a process fluid flow (P1, P2) permeable or permeable flow channel structure (2.1.4), wherein the at least one inflow opening at least one first closure means (2.1.5) and at least one outflow opening at least one second closure means (2.1.6) is associated, and
a second tool element (2.2) is used, which comprises a flow channel structure (2.2.4) extending between at least one inflow opening and at least one outflow opening, arranged or formed by a process fluid flow (P1, P2) permeable or permeable flow channel structure (2.2.4), wherein the at least one inflow opening at least one first closure means (2.1.5) and the at least one outflow opening at least one second closure means (2.2.6) is associated.

6. The method according to claim 5, **characterized in that** at least one of the respective second locking devices (2.1.6, 2.2.6), in particular valve devices, downstream arranged further locking device (7, 8), in particular adjustable valve device, is used.

7. The method according to claim 6, **characterized in that** several of the respective second locking devices (2.1.6, 2.2.6), in particular valve devices, downstream arranged adjustable locking devices (7, 8), in particular valve devices, are used, wherein the multiple locking devices (7, 8) are arranged or formed in parallel.

8. The method according to any one of claims 6 or 7, **characterized in that** the operation of at least one further locking device (7, 8) is controlled to regulate the pressure level within the first and / or second tool element (2.1, 2.2).

9. The method of claim 8, **characterized in that** the operation of the at least one further locking device (7, 8) is controlled to regulate the pressure level within the second locking device (2.1.6, 2.2.6) of the second tool element (2.2), wherein the control of the pressure level within the second tool element (2.2) takes place when the second locking device (2.1.6, 2.2.6) associated with the first tool element (2.1) is closed.

10. The method according to any one of the preceding claims, **characterized in that** the first and the second process fluid flow (P1, P2) flow simultaneously through the mold cavity (2.3) for a period of between 0.2 s and 60 s.

11. The method according to one of the preceding claims, **characterized in that** as the respective process fluid flow (P1, P2) forming process fluid steam, in particular hot steam, is used.

12. The method according to one of the preceding claims, **characterized in that** the tool elements (2.1, 2.2), in particular for different vaporization processes of the mold tool cavity (2.3), within which respectively a corresponding first and a corresponding second process fluid flow (P1, P2) is generated, are alternately used as the first tool element (2.1) and as the second tool element (2.2).

13. A device (1) for processing particle foam material for producing a particle foam molding, wherein the device (1) for carrying out a method according to any one of claims 1 to 12 is set up and comprises:
- a first tool element (2.1) and a second tool element (2.2), wherein the first and the second tool element (2.1, 2.2), in particular by at least one movement relative to each other, are arranged to define a mold tool cavity (2.3), wherein
the first tool element (2.1) has at least one opening (2.1.3) through which a process fluid flow (P1, P2) can flow into the mold cavity (2.3) via the first tool element (2.1), and
the second tool element (2.2) has at least one opening (2.2.3) through which a process fluid flow (P1, P2) from the mold cavity (2.3) is inflowable into the second tool element (2.2), and has at least one opening (2.2.3) through which a process fluid flow (P1, P2) from the second tool element (2.2) is outflowable;
- a process fluid actuator device (4) which is used to control or regulate the operation of one or more locking devices that can be assigned to the respective tool elements (2.1, 2.2) (2.1.5, 2.1.6, 2.2.5, 2.2.6, 7, 8),
for generating a first process fluid flow (P1) flowing through the mold cavity (2.3), wherein the first process fluid flow (P1) flows through at least one opening (2.1.3) of the first mold element (2.1) into the mold cavity (2.3) and flows out of the mold cavity (2.3) via at least one opening (2.2.3) of the second mold element (2.2); and
for generating a second process fluid flow (P2) flowing through the second tool element (2.2), wherein the second process fluid flow (P2) flows through at least one opening (2.2.1) of the second tool element (2.2) into the second tool element (2.2) and flows out of the second tool element (2.2) via at least one opening (2.2.2) of the second tool element (2.2), and
for setting at least one flow parameter affecting the flow properties of at least one process fluid flow (P1, P2), in particular such that the first and the second process fluid flow (P1, P2) differ in at least one flow parameter affecting the flow properties, is arranged, wherein the first and the second process fluid flow (P1, P2) simultaneously flow through the mold cavity (2.3).

## Revendications

1. Un procédé de traitement de mousse de particules pour la fabrication d'un moulage de mousse de particules, comprenant:
- Créer un premier flux de fluide de processus (P1) traversant deux éléments d'outil (2.1, 2.2) définis (2.3), le premier flux de fluide de processus (P1) entrant dans la cavité de l'outil (2.3) par au moins une ouverture (2.1.3) d'un premier élément d'outil (2.1) et sortant de la cavité de l'outil (2.3) par au moins une ouverture (2.2.3) d'un deuxième élément d'outil (2.2); et
- Créer un deuxième flux de fluide de procédé (P2), le deuxième flux de fluide de procédé (P2) entrant dans le deuxième élément d'outil (2.2) par au moins une ouverture (2.2.1) du deuxième élément d'outil (2.2) et sortant du deuxième élément d'outil (2.2) par au moins une ouverture (2.2.2) du deuxième élément d'outil (2.2),
les premier et deuxième flux de fluide de procédé (P1, P2) diffèrent par au moins un paramètre d'écoulement influençant les caractéristiques d'écoulement, **caractérisé en ce que**:
les premier et deuxième flux de fluide de processus (P1, P2) traversent simultanément la cavité de l'outil de formage (2.3).

2. Le procédé selon la revendication 1, **caractérisé en ce que** l'un au moins des paramètres d'écoulement influençant les propriétés d'écoulement est la pression des flux de fluide de procédé (P1, P2).

3. Le procédé selon la revendication 1 ou 2, **caractérisé en ce que** le deuxième flux de fluide de procédé (P2) présente une pression, notamment d'au moins un facteur 2, inférieure à celle du premier flux de fluide de procédé (P1).

4. Le procédé selon l'une quelconque des revendications précédentes, **caractérisé en ce que** les premier et deuxième flux de fluide de procédé (P1, P2) sont mis à disposition au moyen d'au moins un dispositif de mise à disposition de fluide de procédé (6), en utilisant un dispositif de mise à disposition de fluide de procédé (6), qui est configuré pour fournir au choix au premier élément d'outillage (2.1) un fluide de procédé pour former le premier flux de procédé (P1) et/ou au deuxième élément d'outillage (2.2) un fluide de procédé pour former le deuxième flux de fluide de procédé (P2).

5. Le procédé selon l'une quelconque des revendications précédentes, **caractérisé en ce qu'est** utilisé un premier élément d'outil (2.1) comprenant une structure de conduit d'écoulement (2.1.4) disposée ou formée entre au moins un orifice d'entrée et au moins un orifice de sortie, qui peut être traversé ou traversé par un flux de fluide de procédé (P1, P2), auquel est attribué au moins un orifice d'entrée au moins un premier dispositif de fermeture (2.1.5) et à au moins un orifice de sortie au moins un deuxième dispositif de fermeture (2.1.6), et
un deuxième élément d'outillage (2.2) comprenant une structure de conduit d'écoulement (2.2.4), disposée ou formée entre au moins un orifice d'entrée et au moins un orifice de sortie, qui peut être traversé ou traversé par un flux de fluide de procédé (P1, P2), auquel est attribué au moins un orifice d'entrée au moins un premier dispositif de fermeture (2.1.5) et à au moins un orifice de sortie au moins un deuxième dispositif de fermeture (2.2.6).

6. Le procédé selon la revendication 5, **caractérisé en ce qu'au** moins un autre dispositif de fermeture (7, 8), en particulier un dispositif de soupape réglable, placé en aval des deuxièmes dispositifs de fermeture respectifs (2.1.6, 2.2.6), en particulier des dispositifs de soupape, est utilisé.

7. Le procédé selon la revendication 6, **caractérisé en ce que** plusieurs dispositifs de fermeture réglables (7, 8) situés en aval des deuxièmes dispositifs de fermeture respectifs (2.1.6, 2.2.6), en particulier des dispositifs de vanne, sont utilisés, les multiples dispositifs de fermeture (7, 8) étant disposés ou formés en parallèle.

8. Le procédé selon l'une quelconque des revendications 6 ou 7, **caractérisé en ce que** le fonctionnement d'au moins un autre dispositif de fermeture (7, 8) est réglé pour réguler le niveau de pression à l'intérieur du premier et/ou du deuxième élément d'outil (2.1, 2.2).

9. Le procédé selon la revendication 8, **caractérisé en ce que le fonctionnement d'au** moins un autre dispositif de fermeture (7, 8) est réglé pour régler le niveau de pression à l'intérieur du deuxième dispositif de fermeture (2.1.6, 2.2.6) du deuxième élément d'outil (2.2), le niveau de pression étant réglé à l'intérieur du deuxième élément d'outil (2.2) lorsque le deuxième dispositif de fermeture (2.1.6, 2.2.6) attribué au premier élément d'outil (2.1) est fermé.

10. Le procédé selon l'une quelconque des revendications précédentes, **caractérisé en ce que** les premier et deuxième flux de fluide de processus (P1, P2) traversent simultanément la cavité de l'outil de moulage (2.3) pendant une période comprise entre 0,2 s et 60 s.

11. Le procédé selon l'une quelconque des revendications précédentes, **caractérisé en ce que** la vapeur, en particulier la vapeur chaude, est utilisée comme fluide de procédé formant l'écoulement de fluide de procédé respectif (P1, P2).

12. Le procédé selon l'une quelconque des revendications précédentes, **caractérisé en ce que les éléments d'outil** (2.1, 2.2), en particulier pour différents processus d'évaporation de la cavité de l'outil de moulage (2.3), dans lequel un premier et un deuxième flux de fluide de processus correspondants (P1, P2) sont respectivement utilisés comme premier élément d'outil (2.1) et comme deuxième élément d'outil (2.2).

13. Un dispositif (1) pour le traitement de mousse de particules en vue de la fabrication d'une pièce moulée en mousse de particules, dans lequel le dispositif (1) est équipé pour effectuer un procédé selon l'une quelconque des revendications 1 à 12 et comprend:
- un premier élément d'outil (2.1) et un deuxième élément d'outil (2.2), où le premier et le deuxième élément d'outil (2.1, 2.2), notamment par au moins un mouvement par rapport à l'autre, sont mis en place pour définir une cavité d'outil de forme (2.3), où
le premier élément d'outillage (2.1) comporte au moins une ouverture (2.1.3) par laquelle un flux de fluide de processus (P1, P2) peut être introduit dans la cavité de l'outillage (2.3) via le premier élément d'outillage (2.1) et
le deuxième élément d'outil (2.2) comporte au moins une ouverture (2.2.3) par laquelle un flux de fluide de procédé (P1, P2) peut être acheminé de la cavité de l'outil de moulage (2.3) vers le deuxième élément d'outil (2.2) et au moins une ouverture (2.2.3) par laquelle un flux de fluide de procédé (P1, P2) peut être acheminé du deuxième élément d'outil (2.2);
- un dispositif d'actionneur de fluide de procédé (4) qui permet de commander ou de réguler le fonctionnement d'un ou de plusieurs dispositifs de fermeture affectés aux éléments d'outillage correspondants (2.1, 2.2) (2.1.5, 2.1.6, 2.2.5, 2.2.6, 7, 8),
est conçu pour produire un premier flux de fluide de procédé (P1) traversant la cavité de l'outil de formage (2.3), le premier flux de fluide de procédé (P1) entrant dans la cavité de l'outil de formage (2.3) par au moins une ouverture (2.1.3) du premier élément d'outillage (2.1) et sortant de la cavité de l'outil de formage (2.3) par au moins une ouverture (2.2.3) du deuxième élément d'outillage (2.2); et
est conçu pour produire un deuxième flux de fluide de processus (P2) traversant le deuxième élément d'outil (2.2), le deuxième flux de fluide de processus (P2) entrant dans le deuxième élément d'outil (2.2) par au moins une ouverture (2.2.1) du deuxième élément d'outil (2.2) et sortant du deuxième élément d'outil (2.2) par au moins une ouverture (2.2.2) du deuxième élément d'outil (2.2), et
au moins un paramètre d'écoulement influençant les caractéristiques d'écoulement d'au moins un flux de fluide de procédé (P1, P2), en particulier de telle sorte que les premier et deuxième flux de fluide de procédé (P1, P2) diffèrent par au moins un paramètre d'écoulement influençant les caractéristiques d'écoulement, les premier et deuxième flux de fluide de procédé (P1, P2) traversant simultanément la cavité de l'outil de moulage (2.3).
